# EUROPEAN PATENT SPECIFICATION

(11) **EP 4 429 310 B1**
(45) Date of publication and mention of the grant of the patent: **07.10.2026**
(21) Application number: 22903483.0
(22) Date of filing: 07.12.2022
(51) Int. Cl.: H04W 24/02, H04W 4/38, H04B 17/309, H04W 24/08

(54) **COMMUNICATION METHOD AND COMMUNICATION DEVICE**
KOMMUNIKATIONSVERFAHREN UND KOMMUNIKATIONSVORRICHTUNG
PROCÉDÉ ET DISPOSITIF DE COMMUNICATION

(30) Priority: 07.12.2021 CN 202111486867
(43) Date of publication of application: 11.09.2024
(73) Proprietor: Huawei Technologies Co., Ltd., Shenzhen, Guangdong 518129 (CN)
(72) Inventor: LIU, Nan, Xi'an, Shaanxi 710071 (CN); YANG, Minglei, Xi'an, Shaanxi 710071 (CN); WANG, Wenxin, Xi'an, Shaanxi 710071 (CN); ZENG, Kun, Shenzhen, Guangdong 518129 (CN)
(74) Representative: Pfenning, Meinig & Partner mbB
(86) International application number: PCT/CN2022/137090
(87) International publication number: WO 2023/104061

(56) References cited:
- EP-A1- 4 043 917
- CN-A- 109 451 430
- CN-A- 109 714 647
- CN-A- 112 748 425
- CN-A- 112 748 425
- CN-A- 112 986 903
- CN-A- 113 225 814
- US-A1- 2012 079 018
- PENGCHENG ZHAN ET AL: "Adaptive Mobile Sensor Positioning for Multi-Static Target Tracking", IEEE TRANSACTIONS ON AEROSPACE AND ELECTRONIC SYSTEMS, IEEE SERVICE CENTER, PISCATAWAY, NJ, US, vol. AES-3, no. 1, 1 January 2010 (2010-01-01), pages 120 - 132, XP011303237, ISSN: 0018-9251

## Description

### TECHNICAL FIELD

This application relates to the field of communication technologies, and in particular, to a communication method and a communication device.

### BACKGROUND

In a wireless sensing technology, electromagnetic waves generated by a transmit antenna are radiated to a region to be sensed, and a plurality of propagation paths are formed. A receive antenna receives an echo signal that is obtained by superimposing signal components on the plurality of paths, and the echo signal reflects a plurality of types of information in signal propagation space. The received echo signal is analyzed and processed to obtain characteristics of the signal propagation space, and sensing functions such as target positioning, motion state monitoring, and scene imaging can be implemented.

Currently, with evolution from a conventional communication network for information transmission and exchange to an integrated sensing and communication network with some information collection, calculation, and analysis capabilities, a core node device (for example, a base station, a terminal device, or a vehicle-mounted device) for constructing the integrated sensing and communication network may further have a specific wireless sensing capability in addition to a conventional communication function. However, how to improve sensing precision of the node device for a sensing region to improve sensing performance is a problem that needs to be urgently resolved currently.

CN 112 748 425 A discloses a sensing method comprising the steps that: a second node receives first information from a first node, the first information comprises transmitted beam information of the first node and/or received beam information of the second node; and the second node receives a reference signal and an echo signal according to the transmitted beam information and/or the received beam information, and performs sensing based on the reference signal and the echo signal.

PENGCHENG ZHAN ET AL.: "Adaptive Mobile Sensor Positioning for Multi-Static Target Tracking", 2010-01-01, discloses that the use of multiple UAV (Unmanned air vehicles) agents in a target tracking application where performance is improved by exploiting each agent's maneuverability. Local time-delay and Doppler measurements made at each UAV are used as inputs to an extended Kalman filter (EKF) which tracks the target's position and velocity.

### SUMMARY

The present invention is set out in the appended set of claims. This application provides a communication method and a communication device, to improve sensing precision and improve sensing performance of an integrated sensing and communication network.

A first aspect of this application provides a communication method, including:
A first communication device receives a first message from a second communication device, where the first message is used to request or configure at least one piece of sensing information, and the at least one piece of sensing information includes attitude information, antenna direction information, and motion location information of the first communication device. The first communication device transmits a first signal to a target sensing region based on the at least one piece of sensing information.

In the foregoing technical solution, the first message is used to request or configure at least one piece of sensing information, and the at least one piece of sensing information includes the attitude information, the antenna direction information, and the motion location information of the first communication device. The first communication device transmits the first signal to the target sensing region based on the at least one piece of sensing information. For the second communication device, the at least one piece of sensing information may assist the second communication device in sensing the target sensing region. This helps improve sensing precision of the second communication device in sensing the target sensing region, and improve sensing performance. The second communication device uses the first communication device to assist in sensing the target sensing region, and the second communication device may implement sensing of the target sensing region by receiving an echo signal of the first signal. That is, a bistatic (a transmit end and a receive end are disposed at different geographical locations) solution (a transmit end and a receive end are disposed at different geographical locations) is used to expand an aperture of a virtual array and improve sensing precision.

In a possible implementation, the method further includes:
The first communication device sends the at least one piece of sensing information to the second communication device.

In this implementation, if the first message is used to request the at least one piece of sensing information of the first communication device, the first communication device may feed back the at least one piece of sensing information to the second communication device. Therefore, the second communication device obtains the at least one piece of sensing information. The at least one piece of sensing information may assist the second communication device in sensing the target sensing region. This helps improve the sensing precision of the second communication device in sensing the target sensing region, and improve the sensing performance.

In another possible implementation, the first message further includes precision requirement information. The precision requirement information indicates a precision requirement for the attitude information and the antenna direction information. The attitude information and the antenna direction information that are sent by the first communication device to the second communication device meet the precision requirement.

In this implementation, the first message further includes the precision requirement information, and the precision requirement information indicates the precision requirement for the attitude information and the antenna direction information. In this way, the second communication device obtains the sensing information that meets the precision requirement. This helps improve the sensing precision of the second communication device in sensing the target sensing region, and improve the sensing performance.

In another possible implementation, the first message is used to request the at least one piece of sensing information, and the method further includes:
The first communication device determines whether to send the at least one piece of sensing information. If the first communication device determines to send the at least one piece of sensing information, the first communication device performs an action of sending, by the first communication device, the at least one piece of sensing information to the second communication device. In this implementation, the first communication device may determine whether to send the at least one piece of sensing information, and then perform a corresponding sending operation.

In another possible implementation, the method further includes:
The first communication device receives a second message sent by the second communication device, where the second message indicates the first communication device to switch from a first mode to a second mode, a signal in the first mode is a communication signal, and a signal in the second mode is a sensing signal or an integrated sensing and communication signal; and that the first communication device transmits a first signal to a target sensing region based on the at least one piece of sensing information includes: The first communication device transmits the first signal to the target sensing region in the second mode based on the at least one piece of sensing information.

In this implementation, the first communication device receives the second message, and switches from the first mode to the second mode. Then, the first communication device transmits the first signal to the target sensing region in the second mode based on the at least one piece of sensing information. The signal in the second mode is a sensing signal or an integrated sensing and communication signal. This helps improve the sensing precision of the second communication device for the target sensing region.

In another possible implementation, the first message is further used to configure a periodicity for transmitting the first signal by the first communication device; and
that the first communication device transmits a first signal to a target sensing region based on the at least one piece of sensing information includes: The first communication device transmits the first signal to the target sensing region based on the at least one piece of sensing information by using the periodicity.

In this implementation, the second communication device may configure the periodicity for transmitting the first signal by the first communication device, so that a product of a movement speed of the first communication device and the periodicity for transmitting the first signal by the first communication device is less than a half wavelength, namely, a half of a wavelength of the first signal transmitted by the first communication device. This ensures the sensing precision.

In another possible implementation, the method further includes:
The first communication device receives a third message from the second communication device, where the third message indicates the first communication device to transmit the first signal to the target sensing region by using a first frequency band; and
that the first communication device transmits a first signal to a target sensing region based on the at least one piece of sensing information includes:

The first communication device transmits the first signal to the target sensing region based on the at least one piece of sensing information by using the first frequency band.

In this implementation, the first communication device may receive the third message. Then, the first communication device transmits the first signal to the target sensing region based on the at least one piece of sensing information by using the first frequency band. Therefore, the second communication device accurately senses the target sensing region by using the echo signal of the first signal.

In another possible implementation, the method further includes:
The first communication device receives a fifth message from the second communication device, where the fifth message indicates the first communication device to transmit the first signal to the target sensing region in a first polarization direction; and
that the first communication device transmits a first signal to a target sensing region based on the at least one piece of sensing information includes:

The first communication device transmits the first signal to the target sensing region based on the at least one piece of sensing information and the first polarization direction.

In this implementation, the first communication device may receive the fifth message. Then, the first communication device transmits the first signal to the target sensing region in the first polarization direction based on the at least one piece of sensing information. Therefore, the second communication device accurately senses the target sensing region by using the echo signal of the first signal.

In another possible implementation, the first communication device transmits the first signal to the target sensing region for a plurality of times during movement, to form a first virtual transmit array.

In this implementation, the first communication device transmits the first signal for a plurality of times during movement, to form the virtual transmit array similar to a synthetic aperture array. An aperture of the virtual transmit array is increased. This helps improve the sensing precision of the second communication device for the target sensing region. A quantity of required real-aperture array elements is reduced, and hardware costs are reduced.

In another possible implementation, the second communication device forms a first virtual receive array in a process of receiving a first echo signal for a plurality of times during movement.

In this implementation, the second communication device receives the first echo signal for a plurality of times during movement, to form the virtual receive array similar to a synthetic aperture array. A quantity of virtual array elements of a receive antenna is effectively increased, and an aperture of the virtual receive array is increased. This helps improve the sensing precision of the second communication device for the target sensing region. The quantity of required real-aperture array elements is reduced, and the hardware costs are reduced.

In another possible implementation, the first communication device is a terminal device, and the second communication device is a network device.

It may be learned that, in the technical solution of this application, in an integrated sensing and communication network, the network device may obtain the at least one piece of sensing information from the terminal device by using specific signaling, to make full use of a communication capability between the terminal device and the network device. The network device may select the terminal device to assist in sensing the target sensing region. Therefore, the technical solutions of this application can implement sensing in different scenarios, sensing in a large scenario range, and sensing in a plurality of scenario directions. This improves flexibility of a scenario to which the solutions are applicable, implements evolution of the integrated sensing and communication network, and effectively reflects integration of a communication technology and a sensing technology.

A second aspect of this application provides a communication method. The method includes:
A second communication device sends a first message to a first communication device, where the first message is used to request or configure at least one piece of sensing information, and the at least one piece of sensing information includes attitude information, antenna direction information, and motion location information of the first communication device; the second communication device receives a first echo signal from a target sensing region, where the first echo signal is obtained by reflecting, by the target sensing region, a first signal that is transmitted by the first communication device to the target sensing region based on the at least one piece of sensing information; and
the second communication device senses the target sensing region based on the at least one piece of sensing information and the first echo signal.

In the foregoing technical solution, the second communication device senses the target sensing region based on the at least one piece of sensing information and the first echo signal. The second communication device selects the first communication device to assist the second communication device in sensing the target sensing region. The second communication device may implement sensing of the target sensing region by receiving the first echo signal. That is, a bistatic (a transmit end and a receive end are disposed at different geographical locations) solution is used to expand an aperture of a virtual array and improve sensing precision. The at least one piece of sensing information includes the attitude information, the antenna direction information, and the motion location information of the first communication device. The second communication device may sense the target sensing region by using the at least one piece of sensing information and an echo signal of the first signal. This helps improve sensing precision of the second communication device in sensing the target sensing region, and improve sensing performance.

In a possible implementation, the method further includes: The second communication device receives the at least one piece of sensing information from the first communication device.

In this implementation, if the first message is used to request the at least one piece of sensing information of the first communication device, the first communication device may feed back the at least one piece of sensing information to the second communication device. Therefore, the second communication device obtains the at least one piece of sensing information. The at least one piece of sensing information may assist the second communication device in sensing the target sensing region. This helps improve the sensing precision of the second communication device in sensing the target sensing region, and improve the sensing performance.

In another possible implementation, the first message further includes precision requirement information. The precision requirement information indicates a precision requirement for the attitude information and the antenna direction information. The attitude information and the antenna direction information that are sent by the first communication device to the second communication device meet the precision requirement.

In this implementation, the first message further includes the precision requirement information, and the precision requirement information indicates the precision requirement for the attitude information and the antenna direction information. In this way, the second communication device obtains the sensing information that meets the precision requirement. This helps improve the sensing precision of the second communication device in sensing the target sensing region, and improve the sensing performance.

In another possible implementation, the method further includes: The second communication device sends a second message to the first communication device, where
the second message indicates the first communication device to switch from a first mode to a second mode, a signal in the first mode is a communication signal, and a signal in the second mode is a sensing signal or an integrated sensing and communication signal.

In this implementation, the second communication device sends the second message to the first communication device, to indicate the first communication device to switch from the first mode to the second mode. The signal in the second mode is a sensing signal or an integrated sensing and communication signal. This helps improve the sensing precision of the second communication device for the target sensing region.

In another possible implementation, the first message is further used to configure a periodicity for transmitting the first signal by the first communication device. In this implementation, the second communication device may configure the periodicity for transmitting the first signal by the first communication device, so that a product of a movement speed of the first communication device and the periodicity for transmitting the first signal by the first communication device is less than a half wavelength, namely, a half of a wavelength of the first signal transmitted by the first communication device. This ensures the sensing precision.

In another possible implementation, the method further includes:
The second communication device sends a third message to the first communication device, where the third message indicates the first communication device to transmit the first signal to the target sensing region by using a first frequency band; the second communication device sends a fourth message to a third communication device, where the fourth message indicates the third communication device to transmit a second signal to the target sensing region by using a second frequency band; and the second communication device receives a second echo signal from the target sensing region, where the second echo signal is obtained by reflecting, by the target sensing region, the second signal that is transmitted by the third communication device to the target sensing region by using the second frequency band; and that the second communication device senses the target sensing region based on the at least one piece of sensing information and the first echo signal includes: The second communication device senses the target sensing region based on the at least one piece of sensing information, the first echo signal, and the second echo signal.

In this implementation, the second communication device may configure different communication devices to transmit signals to the target sensing region in different polarization directions, so that the second communication device receives echo signals of the signals that are transmitted by the different communication devices in the different polarization directions. The second communication device may sense the target sensing region by using these echo signals. This improves the sensing precision and the sensing performance.

In another possible implementation, the method further includes:
The second communication device sends a fifth message to the first communication device, where the fifth message indicates the first communication device to transmit the first signal to the target sensing region in a first polarization direction; the second communication device sends a sixth message to a third communication device, where the sixth message indicates the third communication device to transmit a third signal to the target sensing region in a second polarization direction; and the second communication device receives a third echo signal from the target sensing region, where the third echo signal is obtained by reflecting, by the target sensing region, the third signal that is transmitted by the third communication device to the target sensing region in the second polarization direction; and that the second communication device senses the target sensing region based on the at least one piece of sensing information and the first echo signal includes: The second communication device senses the target sensing region based on the at least one piece of sensing information, the first echo signal, and the third echo signal.

In this implementation, the second communication device may configure different communication devices to transmit signals to the target sensing region in different polarization directions. An independent bistatic system is formed between the second communication device and any communication device. In this case, a multi-static system in which information from a plurality of frequency bands is synthesized may be formed between the second communication device and the plurality of communication devices. The second communication device may sense the target sensing region by using echo signals of the signals that are transmitted by the different communication devices. This improves the sensing precision for the target sensing region.

In another possible implementation, the first communication device transmits the first signal to the target sensing region for a plurality of times during movement, to form a first virtual transmit array.

In this implementation, the first communication device transmits the first signal for a plurality of times during movement, to form the virtual transmit array similar to a synthetic aperture array. An aperture of the virtual transmit array is increased. This helps improve the sensing precision of the second communication device for the target sensing region. A quantity of required real-aperture array elements is reduced, and hardware costs are reduced.

In another possible implementation, the second communication device forms a first virtual receive array in a process of receiving the first echo signal for a plurality of times during movement.

In this implementation, the second communication device receives the first echo signal for a plurality of times during movement, to form the virtual receive array similar to a synthetic aperture array. A quantity of virtual array elements of a receive antenna is effectively increased, and an aperture of the virtual receive array is increased. This helps improve the sensing precision of the second communication device for the target sensing region. The quantity of required real-aperture array elements is reduced, and the hardware costs are reduced.

In another possible implementation, the first communication device is a terminal device, and the second communication device is a network device.

It may be learned that, in the technical solution of this application, in an integrated sensing and communication network, the network device may obtain the at least one piece of sensing information from the terminal device by using specific signaling, to make full use of a communication capability between the terminal device and the network device. The network device may select the terminal device to assist in sensing the target sensing region. Therefore, the technical solutions of this application can implement sensing in different scenarios, sensing in a large scenario range, and sensing in a plurality of scenario directions. This improves flexibility of a scenario to which the solutions are applicable, implements evolution of the integrated sensing and communication network, and effectively reflects integration of a communication technology and a sensing technology.

A third aspect of this application provides a first communication device, including:
a transceiver module, configured to: receive a first message from a second communication device, where the first message is used to request or configure at least one piece of sensing information, and the at least one piece of sensing information includes attitude information, antenna direction information, and motion location information of the first communication device; and transmit a first signal to a target sensing region based on the at least one piece of sensing information.

In a possible implementation, the transceiver module is further configured to:
send the at least one piece of sensing information to the second communication device.

In another possible implementation, the first message further includes precision requirement information. The precision requirement information indicates a precision requirement for the attitude information and the antenna direction information. The attitude information and the antenna direction information that are sent by the first communication device to the second communication device meet the precision requirement.

In another possible implementation, the first message is used to request the at least one piece of sensing information; and the first communication device further includes a processing module, where
the processing module is configured to: determine whether to send the at least one piece of sensing information. If the processing module determines to send the at least one piece of sensing information, an action of sending, by the first communication device, the at least one piece of sensing information to the second communication device is performed.

In another possible implementation, the transceiver module is further configured to:
receive a second message sent by the second communication device, where the second message indicates the first communication device to switch from a first mode to a second mode, a signal in the first mode is a communication signal, and a signal in the second mode is a sensing signal or an integrated sensing and communication signal; and
the transceiver module is specifically configured to:
   transmit the first signal to the target sensing region in the second mode based on the at least one piece of sensing information.

In another possible implementation, the first message is further used to configure a periodicity for transmitting the first signal by the first communication device; and
the transceiver module is specifically configured to:
transmit the first signal to the target sensing region based on the at least one piece of sensing information by using the periodicity.

In another possible implementation, the transceiver module is further configured to:
receive a third message from the second communication device, where the third message indicates the first communication device to transmit the first signal to the target sensing region by using a first frequency band; and
the transceiver module is specifically configured to:
   transmit the first signal to the target sensing region based on the at least one piece of sensing information by using the first frequency band.

In another possible implementation, the transceiver module is further configured to:
receive a fifth message from the second communication device, where the fifth message indicates the first communication device to transmit the first signal to the target sensing region in a first polarization direction; and
the transceiver module is specifically configured to:
   transmit the first signal to the target sensing region based on the at least one piece of sensing information and the first polarization direction.

In another possible implementation, the first communication device transmits the first signal to the target sensing region for a plurality of times during movement, to form a first virtual transmit array.

In another possible implementation, the first communication device is a terminal device, and the second communication device is a network device.

A fourth aspect of this application provides a second communication device, including:
a transceiver module, configured to: send a first message to a first communication device, where the first message is used to request or configure at least one piece of sensing information, and the at least one piece of sensing information includes attitude information, antenna direction information, and motion location information of the first communication device; and receive a first echo signal from a target sensing region, where the first echo signal is obtained by reflecting, by the target sensing region, a first signal that is transmitted by the first communication device to the target sensing region based on the at least one piece of sensing information; and
a processing module, configured to sense the target sensing region based on the at least one piece of sensing information and the first echo signal.

In a possible implementation, the transceiver module is further configured to:
receive the at least one piece of sensing information from the first communication device.

In another possible implementation, the first message further includes precision requirement information. The precision requirement information indicates a precision requirement for the attitude information and the antenna direction information. The attitude information and the antenna direction information that are sent by the first communication device to the second communication device meet the precision requirement.

In another possible implementation, the transceiver module is further configured to:
send a second message to the first communication device, where
the second message indicates the first communication device to switch from a first mode to a second mode, a signal in the first mode is a communication signal, and a signal in the second mode is a sensing signal or an integrated sensing and communication signal.

In another possible implementation, the first message is further used to configure a periodicity for transmitting the first signal by the first communication device.

In another possible implementation, the transceiver module is further configured to:
send a third message to the first communication device, where the third message indicates the first communication device to transmit the first signal to the target sensing region by using a first frequency band; send a fourth message to a third communication device, where the fourth message indicates the third communication device to transmit a second signal to the target sensing region by using a second frequency band; and receive a second echo signal from the target sensing region, where the second echo signal is obtained by reflecting, by the target sensing region, the second signal that is transmitted by the third communication device to the target sensing region by using the second frequency band; and
the processing module is specifically configured to:
   sense the target sensing region based on the at least one piece of sensing information, the first echo signal, and the second echo signal.

In another possible implementation, the transceiver module is further configured to:
send a fifth message to the first communication device, where the fifth message indicates the first communication device to transmit the first signal to the target sensing region in a first polarization direction; send a sixth message to a third communication device, where the sixth message indicates the third communication device to transmit a third signal to the target sensing region in a second polarization direction; and receive a third echo signal from the target sensing region, where the third echo signal is obtained by reflecting, by the target sensing region, the third signal that is transmitted by the third communication device to the target sensing region in the second polarization direction; and
the processing module is specifically configured to:
   sense the target sensing region based on the at least one piece of sensing information, the first echo signal, and the third echo signal.

In another possible implementation, the first communication device transmits the first signal to the target sensing region for a plurality of times during movement, to form a first virtual transmit array.

In another possible implementation, the second communication device forms a first virtual receive array in a process of receiving the first echo signal for a plurality of times during movement.

**In** another possible implementation, the first communication device is a terminal device, and the second communication device is a network device.

A fifth aspect of an embodiment of this application provides a first communication device. The first communication device includes a processor and a memory. The memory stores a computer program. The processor is configured to invoke and run the computer program stored in the memory, to enable the processor to implement any implementation of the first aspect.

Optionally, the first communication device further includes a transceiver. The processor is further configured to control the transceiver to receive and send a signal.

A sixth aspect of an embodiment of this application provides a second communication device. The second communication device includes a processor and a memory. The memory stores a computer program. The processor is configured to invoke and run the computer program stored in the memory, to enable the processor to implement any implementation of the second aspect.

Optionally, the second communication device further includes a transceiver. The processor is further configured to control the transceiver to receive and send a signal.

A seventh aspect of this application provides a first communication device. The first communication device includes a processor. The processor is configured to invoke a computer program or computer instructions in a memory, to enable the processor to implement any implementation of the first aspect.

Optionally, the communication device further includes a transceiver. The processor is configured to control the transceiver to receive and send a signal.

An eighth aspect of this application provides a second communication device. The second communication device includes a processor. The processor is configured to invoke a computer program or computer instructions in a memory, to enable the processor to implement any implementation of the first aspect.

Optionally, the communication device further includes a transceiver. The processor is configured to control the transceiver to receive and send a signal.

A ninth aspect of this application provides a first communication device. The first communication device includes a processor, and the processor is configured to perform any implementation of the first aspect.

A tenth aspect of this application provides a second communication device. The second communication device includes a processor, and the processor is configured to perform any implementation of the second aspect.

An eleventh aspect of an embodiment of this application provides a first communication device. The first communication device includes a logic circuit and an input/output interface. The logic circuit is configured to perform a processing operation in any implementation of the first aspect, and the input/output interface is configured to perform receiving and sending operations in any implementation of the first aspect.

A twelfth aspect of an embodiment of this application provides a second communication device. The second communication device includes a logic circuit and an input/output interface. The logic circuit is configured to perform a processing operation in any implementation of the second aspect, and the input/output interface is configured to perform receiving and sending operations in any implementation of the second aspect.

A thirteenth aspect of an embodiment of this application provides a computer program product including instructions. When the computer program product is run on a computer, the computer is enabled to perform any implementation of the first aspect and the second aspect.

A fourteenth aspect of an embodiment of this application provides a computer-readable storage medium, including computer instructions. When the computer instructions are run on a computer, the computer is enabled to perform any implementation of the first aspect and the second aspect.

A fifteenth aspect of an embodiment of this application provides a chip apparatus, including a processor. The processor is configured to: connect to a memory, and invoke a program stored in the memory, to enable the processor to perform any implementation of the first aspect and the second aspect.

A sixteenth aspect of an embodiment of this application provides a communication system. The communication system includes the first communication device according to the third aspect and the second communication device according to the fourth aspect.

It may be learned from the foregoing technical solutions that embodiments of this application have the following advantages:
It may be learned from the foregoing technical solutions that a first communication device receives a first message from a second communication device, where the first message is used to request or configure at least one piece of sensing information, and the at least one piece of sensing information includes attitude information, antenna direction information, and motion location information of the first communication device; and the first communication device transmits a first signal to a target sensing region based on the at least one piece of sensing information. It may be learned that the first communication device is used to assist in sensing the target sensing region in the foregoing technical solutions, and the second communication device may implement sensing of the target sensing region by receiving an echo signal of the first signal. That is, a bistatic (a transmit end and a receive end are disposed at different geographical locations) solution is used to expand an aperture of a virtual array and improve sensing precision. The first message is used to request or configure the at least one piece of sensing information, where the at least one piece of sensing information includes the attitude information, the antenna direction information, and the motion location information of the first communication device. The first communication device transmits the first signal to the target sensing region based on the at least one piece of sensing information. The second communication device may sense the target sensing region based on the at least one piece of sensing information of the first communication device and the echo signal of the first signal. This helps improve sensing precision of the second communication device in sensing the target sensing region, and improve sensing performance.

### BRIEF DESCRIPTION OF DRAWINGS

FIG. 1 is a schematic of a virtual array element and an equivalent phase center according to an embodiment of this application;
FIG. 2 is a schematic of a scenario of a communication method according to an embodiment of this application;
FIG. 3 is a schematic of another scenario of a communication method according to an embodiment of this application;
FIG. 4 is a schematic of an embodiment of a communication method according to an embodiment of this application;
FIG. 5(a) is a schematic of another scenario of a communication method according to an embodiment of this application;
FIG. 5(b) is a schematic of another scenario of a communication method according to an embodiment of this application;
FIG. 6 shows a virtual transmit array formed in a process of transmitting a signal by a terminal device during movement according to an embodiment of this application;
FIG. 7(a) is a schematic of another scenario of a communication method according to an embodiment of this application;
FIG. 7(b) is a schematic of another scenario of a communication method according to an embodiment of this application;
FIG. 7(c) is a schematic of another scenario of a communication method according to an embodiment of this application;
FIG. 8(a) is a schematic of a movement effect of a communication method according to an embodiment of this application;
FIG. 8(b) is a schematic of another movement effect of a communication method according to an embodiment of this application;
FIG. 8(c) is a schematic of another movement effect of a communication method according to an embodiment of this application;
FIG. 8(d) is a schematic of another movement effect of a communication method according to an embodiment of this application;
FIG. 9A to FIG. 9C are a schematic of another embodiment of a communication method according to an embodiment of this application;
FIG. 10 is a schematic of another scenario of a communication method according to an embodiment of this application;
FIG. 11A to FIG. 11C are a schematic of another embodiment of a communication method according to an embodiment of this application;
FIG. 12 is a schematic of another scenario of a communication method according to an embodiment of this application;
FIG. 13 is a schematic of a structure of a first communication device according to an embodiment of this application;
FIG. 14 is a schematic of a structure of a second communication device according to an embodiment of this application;
FIG. 15 is a schematic of another structure of a first communication device according to an embodiment of this application;
FIG. 16 is a schematic of another structure of a second communication device according to an embodiment of this application;
FIG. 17 is a schematic of a structure of a terminal device according to an embodiment of this application; and
FIG. 18 is a schematic of another structure of a second communication device according to an embodiment of this application.

### DESCRIPTION OF EMBODIMENTS

This application provides a communication method and a communication device, to improve sensing precision and improve sensing performance of an integrated sensing and communication network.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner. The terms "include", "comprise", and "have", and variants thereof all mean "include but are not limited to", unless otherwise specifically emphasized in another manner.

In this application, "at least one" means one or more, and "a plurality of" means two or more. The term "and/or" describes an association relationship between associated objects and indicates that three relationships may exist. For example, A and/or B may indicate the following three cases: Only A exists, both A and B exist, and only B exists, where A and B may be singular or plural. "At least one of the following items (pieces)" or a similar expression thereof means any combination of these items, including a singular item (piece) or any combination of plural items (pieces). For example, at least one item (piece) of a, b, or c may represent a, b, c, a-b, a-c, b-c, or a-b-c, where a, b, and c each may be singular or plural.

A communication system to which the technical solutions provided in this application are applicable includes but is not limited to a 4th generation (4th generation, 4G) communication system, a worldwide interoperability for microwave access (worldwide interoperability for microwave access, WiMAX) communication system, a 5th generation (5th generation, 5G) communication system, a communication system after a 5G communication system (for example, a 6G communication system), an internet of vehicles communication system, or a device to device (device to device, D2D) communication system. For example, the 4G communication system may be a long-term evolution (long-term evolution, LTE) system, and the 5G communication system may be a new radio (new radio, NR) system.

The communication system to which this application is applicable includes a first communication device and a second communication device. The first communication device is a device having a communication capability. Optionally, the first communication device further has a sensing capability. The second communication device is a device having both a communication capability and a sensing capability. The first communication device may perform communication and transmission with the second communication device. In a sensing process, the first communication device transmits a signal to a target sensing region by using a transmit antenna, and the second communication device may receive an echo signal of the signal by using a receive antenna, to implement sensing of the target sensing region. Optionally, both the first communication device and the second communication device are terminal devices. Alternatively, the first communication device is a terminal device, and the second communication device is a network device.

The first communication device may be a device in a movement state, or may be a device that is about to move. For example, a motion state of the first communication device may be predicted. For example, the first communication device is in a temporarily parked vehicle that is about to move. The second communication device may be a device in a movement state, or may be a device that is about to move, or may be a device in a static state.

The terminal device may be referred to as user equipment (user equipment, UE), an access terminal, a subscriber unit, a subscriber station, a mobile station (mobile station, MS), a remote terminal, a mobile device, a user terminal, a terminal, a wireless communication device, a user apparatus, a vehicle, or the like. The terminal device may be a cellular phone (cellular phone), a smartphone (smartphone), a wireless data card, a personal digital assistant (personal digital assistant, PDA for short) computer, a tablet computer, a wireless modem (modem), a laptop computer (laptop computer), a machine-type communication (machine-type communication, MTC) terminal, various handheld devices (handset), computer devices, vehicle-mounted devices, wearable devices, or computing devices that have a wireless communication function, or other processing devices connected to a wireless modem, a terminal device in a 5G communication system, a terminal device in an NR system, or a terminal device in a communication system after a 5G network, for example, a terminal device in a future evolved public land mobile network (public land mobile network, PLMN).

For example, the network device is an apparatus that is deployed in a radio access network to provide a wireless communication function for the terminal device. The network device may be a base station, and the base station includes a macro base station, a micro base station, a relay station, and an access network point in various forms. For example, the base station in embodiments of this application may be a base station, a transmission reception point (transmission reception point, TRP), or a transmission point (transmission point, TP) in new radio (new radio, NR), or a next generation NodeB (next generation NodeB, ngNB), or may be an evolved NodeB (evolved NodeB, eNB or eNodeB) in a long-term evolution (long-term evolution, LTE) system.

For ease of understanding the technical solutions of this application, the following describes some technical terms in this application.

1. 3 dB beamwidth: The 3 dB beamwidth indicates an included angle between two directions in which radiated power of an array antenna decreases by 3 dB on both sides of a maximum radiated power direction. The 3 dB beamwidth determines a capability of an antenna to distinguish between two adjacent targets at a same range and has key impact on sensing effect (including an imaging processing effect). A narrower beam indicates better directivity and beam convergence for a target.

### 2. Virtual array and equivalent phase center:

Virtual array: When a real-aperture array transmits or receives a signal at different spatial locations at different moments, it may be considered that a synthetic virtual array exists at all spatial locations of the real-aperture array. That is, a current array element does not actually exist at the spatial location, but it is considered that a virtual array element exists at the spatial location. The idea of virtual array helps effectively increase an array aperture and reduce a quantity of array elements.

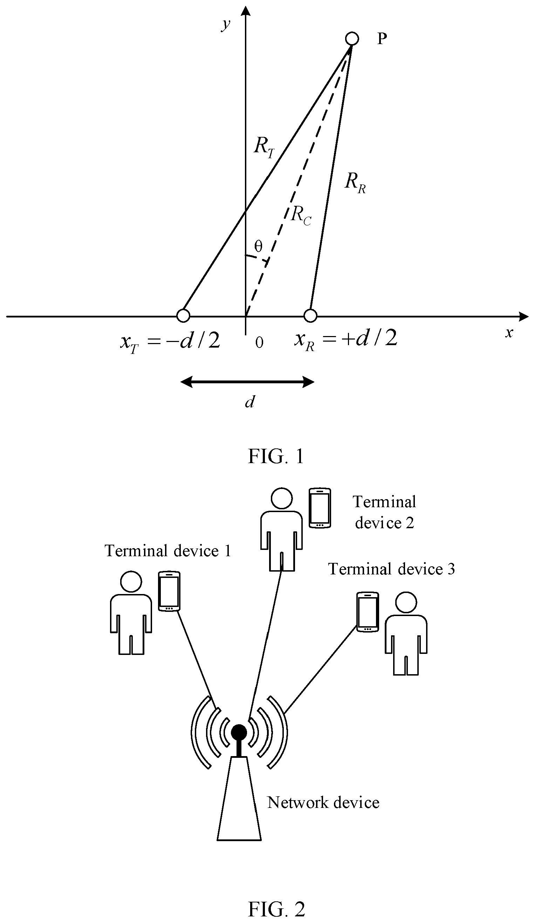

According to an equivalent phase center principle, it may be considered that an independent transmit and receive virtual array element exists at a central phase location of a pair of transmit and receive array elements, and a waveform of radiation and reception of the virtual array element is the same as that of the pair of the transmit and receive array elements. For example, as shown in FIG. 1, an equivalent virtual array element of a pair of transmit and receive array elements *x_{R}* and *x_{T}* is located at x = 0. When transmitting and receiving functions of the transmit and receive array elements are interchanged, a location of the virtual array element remains unchanged. A propagation path of an electromagnetic wave from a radiation source to a scatterer and then to a receiver is referred to as a "channel". A channel model in a bistatic mode shown in FIG. 1 is equivalent to a channel model in a monostatic mode of the virtual array element. When a quantity of array elements at either of a transmit end or a receive end increases, more virtual array elements may exist at the transmit end or the receive end.

3. Virtual array: The virtual array is an array structure jointly formed by a plurality of virtual array elements at different spatial locations.

4. Communication signal: The communication signal is a signal that aims to optimize communication performance, and is mainly used for communication and transmission between devices, and may be further used for sensing of an ambient environment.

5. Sensing signal: The sensing signal is a signal that aims to optimize sensing performance, and is mainly used to sense an ambient environment.

6. Integrated sensing and communication signal: The integrated sensing and communication signal is a signal that aims to optimize both sensing and communication, and is used for communication and transmission between devices and sensing of an ambient environment.

Currently, a conventional communication network is evolved to an integrated sensing and communication network. In addition to implementing conventional communication functions, the integrated sensing and communication network also has a specific wireless sensing capability. In a wireless sensing technology, electromagnetic waves generated by a transmit antenna are radiated to a region to be sensed, and a plurality of propagation paths are formed. A receive antenna receives an echo signal that is obtained by superimposing signal components on the plurality of paths, and the echo signal reflects a plurality of types of information in signal propagation space. The received echo signal is analyzed and processed to obtain characteristics of the signal propagation space, and sensing functions such as target positioning, motion state monitoring, and scene imaging can be implemented.

In actual application, a larger antenna aperture of an antenna array indicates a smaller 3 dB beamwidth of the antenna array, better directivity and beam convergence of beams, and a stronger capability of distinguishing between two adjacent targets at a same range. Therefore, performance of the wireless sensing technology is directly related to an aperture of an antenna array of a device. Currently, in the integrated sensing and communication network, a single base station or terminal device is constrained by a hardware condition, and an aperture size of an antenna array is limited. In some cases, high-precision sensing of a sensing scenario cannot be met by using only an antenna array on a single base station side, and a sensing performance requirement cannot be met.

In view of this, in the technical solutions of this application, coordination between a plurality of devices in the integrated sensing and communication network is used to separately dispose the transmit antenna and the receive antenna in different places, and a solution of signaling exchange and joint sensing between the plurality of devices is designed. In this way, a virtual array aperture of the transmit antenna and/or a virtual array aperture of the receive antenna are/is expanded, a problem of an excessively small size of a real aperture of a single base station is resolved, and sensing performance is improved.

The following describes several possible scenarios to which the technical solutions of this application are applicable.

FIG. 2 is a schematic of a scenario of a communication method according to an embodiment of this application. Refer to FIG. 2. The technical solutions of this application may be used in a networking scenario of a network device and a terminal device in an integrated sensing and communication network.

This networking scenario is similar to a mobile cellular networking scenario. The integrated sensing and communication network has a capability of providing both a communication service and a sensing service. The network device has a communication capability and a sensing capability, and the terminal device has a communication capability. Optionally, the terminal device further has a sensing capability. A corresponding sensing function can be provided between the network device and the terminal device.

The following describes some scenarios in which the network device implements sensing by using the technical solutions of this application.

Scenario 1: The terminal device transmits a signal by using the technical solutions of this application. According to the technical solutions of this application, the network device may implement, by using a communication signal of the terminal device, a plurality of applications such as imaging of an ambient environment of the network device, extraction of a target feature parameter (for example, positioning, a speed, and an acceleration), and detection of a scenario target parameter trajectory (for example, an azimuth angle, an altitude, and a range), road settlement, and building deformation. That is, the network device is assisted in sensing the ambient environment by using the communication signal of the terminal device.

Scenario 2: The terminal device transmits a signal by using the technical solutions of this application. According to the technical solutions of this application, the network device may implement, by using a communication signal of the terminal device, special applications such as sensing and imaging of an ambient environment of the terminal device and detection of an obstacle in the scenario at night or in a condition in which an object is difficult to be identified. That is, the network device is assisted in sensing the ambient environment by using the communication signal of the terminal device.

Scenario 3: The terminal device transmits a signal by using the technical solutions of this application. According to the technical solutions of this application, the network device may sense, by using a signal transmitted by the terminal device, information about an ambient environment, to avoid an obstacle, design a communication link, improve communication performance, and the like. That is, the network device senses the ambient environment to help improve the communication performance.

It may be learned from the foregoing scenarios that the terminal device is used as a transmit end, the network device is used as a receive end, the terminal device is in a movement state, and a remote bistatic system is formed between the terminal device and the network device. A remote multi-static system may be further formed between the network device and a plurality of terminal devices.

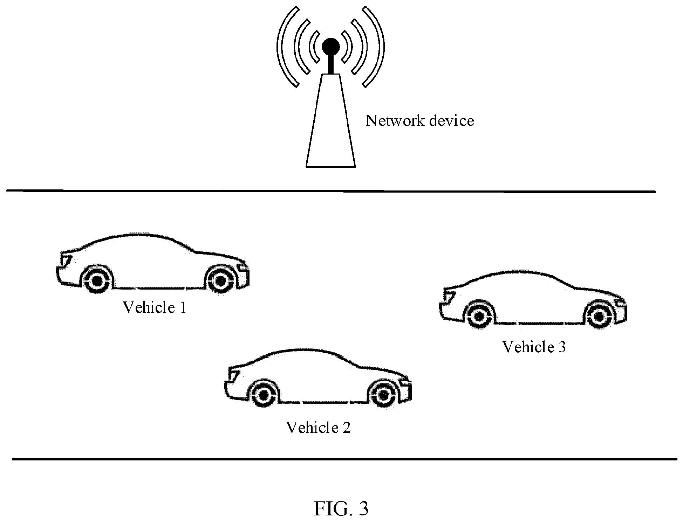

FIG. 3 is a schematic of another scenario of a communication method according to an embodiment of this application. Refer to FIG. 3. The technical solutions of this application may be used in a networking scenario of vehicles and a network device (for example, a roadside base station) in the internet of vehicles.

In this scenario, each vehicle may be considered as an integrated sensing and communication apparatus. In the internet of vehicles scenario, an integrated sensing and communication apparatus responsible for coordinating a roadside base station is installed on a vehicle, a movement speed is even within a specific time, and a movement state is stable. In addition, a movement trajectory of the integrated sensing and communication apparatus may be pre-determined based on a road condition. The roadside base station may sense an ambient environment of the vehicle by using a signal transmitted by the integrated sensing and communication apparatus installed on the vehicle, and monitor road condition information around the vehicle and motion information of surrounding vehicles in real time, to carry out related services such as intelligent driving. The integrated sensing and communication apparatus may perform communication exchange with the roadside base station by using a communication function of the integrated sensing and communication apparatus, and the vehicle may obtain, from the base station, ambient environment information that is of the vehicle and that is sensed by the vehicle, to assist the vehicle in maintaining a good driving state.

It may be learned from the foregoing scenario that the vehicle-mounted device is used as a transmit end, the network device is used as a receive end, the vehicle-mounted device is in a movement state, and a remote bistatic system is formed between the vehicle-mounted device and the network device. A remote multi-static system may be further formed between the network device and a plurality of vehicle-mounted devices.

The technical solutions of this application are described below with reference to specific embodiments.

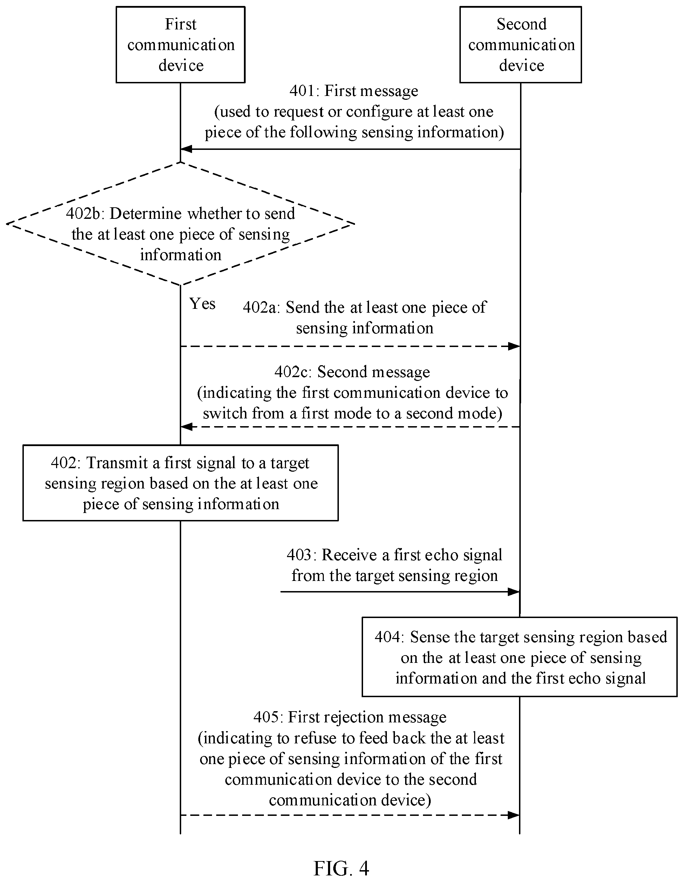

FIG. 4 is a schematic of an embodiment of a communication method according to an embodiment of this application. Refer to FIG. 4. The method includes the following steps.

401: A second communication device sends a first message to a first communication device. The first message is used to request or configure at least one piece of sensing information of the first communication device. Correspondingly, the first communication device receives the first message from the second communication device.

The at least one piece of sensing information of the first communication device includes attitude information, antenna direction information, and motion location information of the first communication device.

The following describes the at least one piece of sensing information of the first communication device.

### 1. Attitude information of the first communication device

The attitude information indicates an attitude of a user holding the first communication device, and a gyroscope in the first communication device is used to detect whether the first communication device is in a horizontal placement state, a vertical placement state, or a placement state at a specific angle with a horizontal plane. The attitude information represents a three-dimensional location of the first communication device, determines an array structure and an orientation angle of an antenna array when scanning, and has decisive impact on sensing precision.

### 2. Antenna direction information of the first communication device

The antenna direction information is orientation information of the first communication device when the user holds the first communication device, or direction information of an antenna of the first communication device.

For example, an antenna array deployed in the first communication device transmits a narrow beam, and the narrow beam has a determined direction. That is, the antenna array is a nonomnidirectional array. The antenna direction information determines a sensing range in a target sensing region radiated by the antenna of the first communication device, and has decisive impact on the sensing range and sensing precision of the target sensing region.

For example, the antenna array deployed in the first communication device is an omnidirectional array. However, when the user holds the first communication device, a case in which some regions are blocked by a body of the user may exist, and the regions in this direction cannot be sensed. That is, the antenna direction information of the first communication device determines whether an incident direction in which the antenna of the first communication device radiates the target sensing region is blocked by the user, a vehicle, or the like, and has decisive impact on the sensing precision.

### 3. Motion location information of the first communication device

The motion location information of the first communication device includes motion parameter information of the first communication device and/or spatial location information of the first communication device.

For example, the spatial location information of the first communication device includes absolute location information of the first communication device; and the motion parameter information of the first communication device includes a movement speed, a movement direction, a movement trajectory, or the like of the first communication device. A more stable movement trajectory and a longer movement range indicate a larger aperture of a first virtual transmit array formed by transmitting a signal by the first communication device during movement. This helps improve the sensing precision. For the first virtual transmit array, refer to related descriptions below.

Optionally, both the first communication device and the second communication device are terminal devices. Alternatively, the first communication device is a terminal device, and the second communication device is a network device.

It should be noted that before step 401, the second communication device determines the target sensing region. The second communication device performs positioning on communication devices around the second communication device, to determine location information of communication devices near the target sensing region. The second communication device selects the first communication device based on the location information of the communication devices near the target sensing region, motion states of the communication devices, and the like, to assist the second communication device in sensing the target sensing region. For example, a range between the first communication device and the target sensing region should be short, so that power, a signal-to-noise ratio, and the like of a signal that is transmitted by the first communication device and that reaches the target sensing region meet a sensing requirement. A location and a motion state (including a speed, a movement trajectory, and the like of the first communication device) of the first communication device determine a structure of a virtual transmit array formed when the first communication device transmits a signal. The second communication device receives an echo signal of the signal transmitted by the first communication device, and senses the target sensing region. The sensing precision should meet the sensing requirement.

It should be noted that the second communication device may select a plurality of first communication devices, and the plurality of first communication devices assist the second communication device in sensing the target sensing region. This is not specifically limited in this application. Herein, a sensing process between the second communication device and the first communication device is used as an example for description. A sensing process between the second communication device and another first communication device is similar. Details are not described herein.

In a possible implementation, in step 401, the first message is used to request the at least one piece of sensing information of the first communication device.

In this implementation, the embodiment shown in FIG. 4 further includes step 402a. Step 402a is performed after step 401, and is performed before step 402.

402a: The first communication device sends the at least one piece of sensing information of the first communication device to the second communication device.

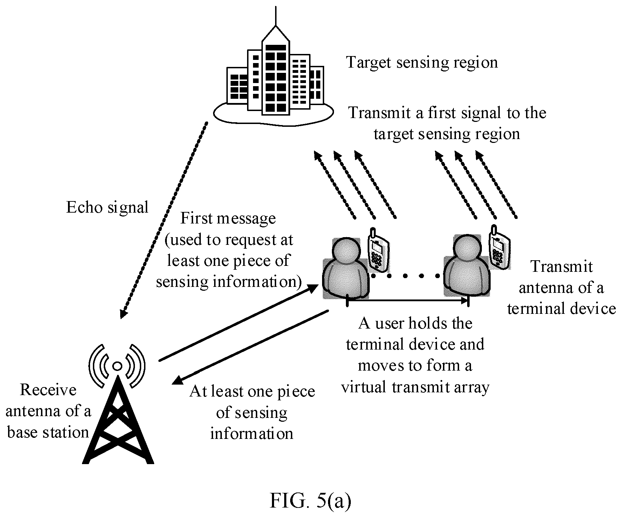

For example, as shown in FIG. 5(a), a base station sends a first message to a terminal device, to request at least one piece of sensing information of the terminal device. The terminal device may feed back the at least one piece of sensing information of the terminal device to the base station.

Optionally, the first message further includes precision requirement information, and the precision requirement information indicates a precision requirement for the attitude information and the antenna direction information of the first communication device. The attitude information and the antenna direction information that are sent by the second communication device to the first communication device meet the precision requirement.

For example, as shown in FIG. 5(a), the attitude of the user holding the terminal device is represented by using an azimuth angle, and precision of the azimuth angle may be in millimeters, centimeters, or the like.

Optionally, an operating frequency band used by the second communication device includes a microwave frequency band, a millimeter-wave frequency band, or a terahertz frequency band. This is not specifically limited in this application. For example, a higher frequency of the operating frequency band used by the second communication device indicates higher sensing precision (for example, a higher range resolution). Therefore, a higher precision requirement is imposed on the at least one piece of sensing information. When requesting the at least one piece of sensing information from the first communication device, the second communication device may add a precision requirement that adapts to the operating frequency band of the second communication device.

Generally, the second communication device can obtain the motion location information of the first communication device by using a capability of the second communication device. For example, the second communication device may obtain the motion location information of the first communication device by using a positioning technology. When the antenna is deployed in the first communication device, and a location of the antenna relative to the first communication device is fixed and cannot be changed, the attitude information and the antenna direction information of the first communication device are strongly related. That is, the second communication device may indirectly determine the antenna direction information of the first communication device by using the attitude information of the first communication device. Therefore, in this scenario, the second communication device may request only the attitude information of the first communication device from the first communication device.

Optionally, in this implementation, the embodiment shown in FIG. 4 further includes step 402b, and step 402b is performed before step 402a.

402b: The first communication device determines whether to send the at least one piece of sensing information of the first communication device. If the first communication device determines to send the at least one piece of sensing information of the first communication device, step 402a is performed; or if the first communication device determines not to send the at least one piece of sensing information of the first communication device, step 405 is performed.

The first communication device determines whether to send the at least one piece of sensing information of the first communication device. If the first communication device determines to send the at least one piece of sensing information of the first communication device, step 402a is performed; or if the first communication device determines not to send the at least one piece of sensing information of the first communication device, step 405 is performed.

The following describes a possible implementation in which the first communication device determines whether to send the at least one piece of sensing information.

The first communication device is a terminal device. The terminal device may provide a pop-up prompt by using a user interface of the terminal device, to prompt the user whether to allow the base station to obtain information about the terminal device. The user may perform a first operation on the user interface. For example, the first operation indicates that the base station is allowed to obtain the information about the terminal device. In this case, the terminal device may generate a first instruction based on the first operation. The first instruction indicates that the user allows the base station to obtain the information about the terminal device. The terminal device may perform an operation in step 402a based on the first instruction. For example, if the first operation indicates that the base station is not allowed to obtain the information about the terminal device, the terminal device may generate a second instruction based on the first operation. The second instruction indicates that the user does not allow the base station to obtain the information about the terminal device. The terminal device may perform an operation in step 405 based on the second instruction.

It should be noted that the process of step 402b is optional. That is, the first communication device only needs to complete information exchange in a background, and does not need to obtain consent or authorization of the user.

In another possible implementation, in step 401, the first message is used to configure the at least one piece of sensing information.

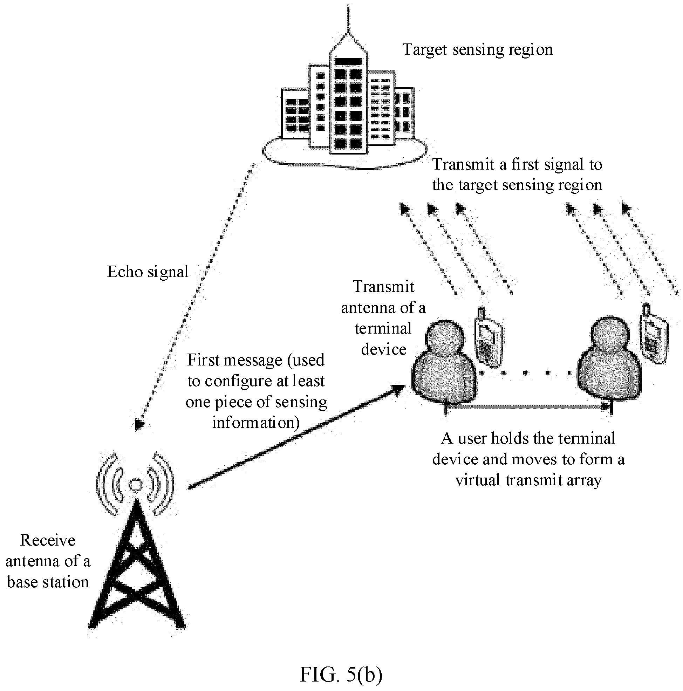

For example, as shown in FIG. 5(b), the base station sends the first message to the terminal device. The first message is used to configure the at least one piece of sensing information for the terminal device. After receiving the at least one piece of sensing information, the terminal device may prompt the user with the at least one piece of sensing information by using the user interface. The user may hold the terminal device based on the attitude information and the antenna direction information, and hold the terminal device based on the motion location information to move.

Optionally, the first message is further used to configure a periodicity for transmitting a first signal by the first communication device.

In a possible implementation, the periodicity for transmitting the first signal by the first communication device may be set with reference to a movement speed and an antenna array structure of the first communication device.

The periodicity for transmitting the first signal by the first communication device mainly indicates a pulse repetition frequency (which may also be referred to as a pulse repetition periodicity) of the first signal. Each time a pulse signal is transmitted, it may be considered that an array (an array having a same specification as a transmit antenna of the first communication device) exists at a transmit location. When the pulse repetition frequencies are the same, a higher movement speed of the first communication device indicates a larger spacing between two adjacent array elements in the virtual transmit array formed in a process of transmitting the first signal by the first communication device. That is, within a same time, the first communication device with a higher movement speed moves for a longer range. However, according to a related theory of array signal processing, a spacing between adjacent array elements of an array cannot be greater than a half wavelength (that is, a half of a wavelength, where the wavelength is a wavelength of the first signal transmitted by the first communication device). Otherwise, in a sensing process, due to impact of a grating lobe, imaging is blurred, and estimation precision of a feature parameter in a feature measurement process is low. Therefore, a product of the movement speed of the first communication device and the periodicity for transmitting the first signal by the first communication device is less than the half wavelength. This ensures the sensing precision.

It should be noted that optionally, the first message may be further used to configure a bandwidth, a sampling rate, a quantity of pulses, a frequency band, and the like for transmitting the first signal by the first communication device. This is not specifically limited in this application.

It may be learned that, in this implementation, the second communication device may configure the at least one piece of sensing information for the first communication device. This helps improve the sensing precision of the second communication device for the target sensing region.

402: The first communication device transmits the first signal to the target sensing region based on the at least one piece of sensing information.

The first communication device transmits the first signal to the target sensing region for a plurality of times during movement, to form the first virtual transmit array. For example, the first communication device periodically transmits the first signal to the target sensing region during movement, to form the first virtual transmit array.

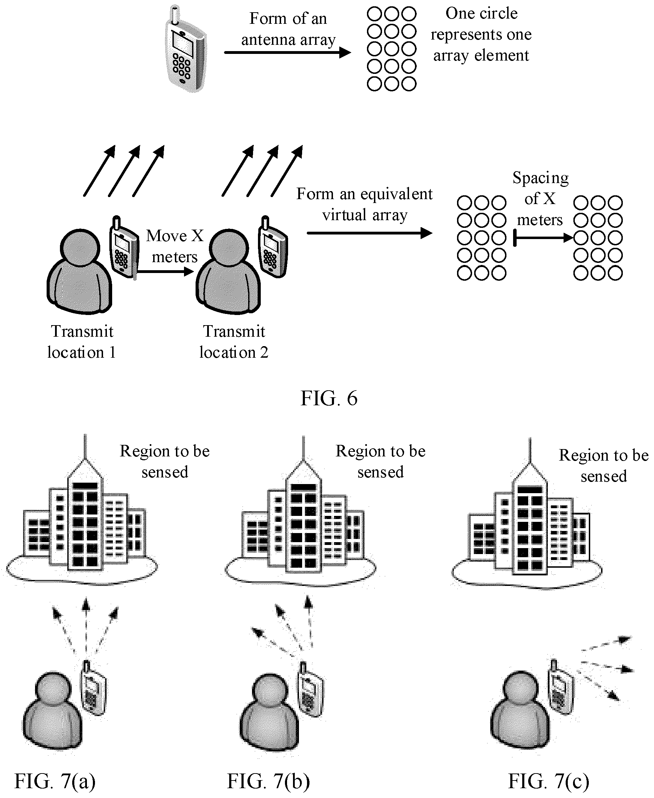

For example, as shown in FIG. 5(a), the user holds the terminal device based on the attitude information and the antenna direction information, and holds the terminal device based on the motion location information to move. The terminal device transmits the first signal to the target sensing region during movement. As shown in FIG. 6, each time the terminal device transmits the first signal during movement, it may be considered that one or more virtual transmit array elements exist at a location at which the terminal device is located. The terminal device transmits the first signal for a plurality of times (for example, periodically) during movement, to form the virtual transmit array similar to a synthetic aperture array. A quantity of virtual array elements of the transmit antenna is effectively increased, and an aperture of the virtual transmit array is increased. This helps improve the sensing precision of the second communication device for the target sensing region. A quantity of required real-aperture array elements is reduced, and hardware costs are reduced.

Optionally, the first communication device may be in a communication state.

Optionally, the first message is further used to configure the periodicity for transmitting the first signal by the first communication device. Step 402 specifically includes: The first communication device transmits the first signal to the target sensing region based on the at least one piece of sensing information according to the periodicity.

Optionally, the embodiment shown in FIG. 4 further includes step 402c, and step 402c may be performed before step 402.

402c: The second communication device sends a second message to the first communication device. The second message indicates the first communication device to switch from a first mode to a second mode. Correspondingly, the first communication device receives the second message from the second communication device.

A signal in the first mode is a communication signal, and a signal in the second mode is a sensing signal or an integrated sensing and communication signal. For example, the signal in the second mode is a frequency-modulated continuous wave signal or a monopulse signal.

Optionally, the first mode and the second mode include at least one of the following: A bandwidth of a signal used in the first mode is less than a bandwidth of a signal used in the second mode; energy of the signal used in the first mode is less than energy of the signal used in the second mode; and a pulse width of the signal used in the first mode is less than a pulse width of the signal used in the second mode.

For example, the signal in the second mode generally uses a large time-bandwidth product signal, and a large compression ratio, a good speed resolution, and a good range resolution may be obtained in a pulse compression process. A larger bandwidth of the signal indicates a better range resolution and a larger time duration (namely, pulse width). This can improve transmit power of the signal. Greater signal energy can ensure a maximum range of the signal. That is, the signal can travel further. This helps improve the sensing precision of the second communication device for the target sensing region.

It should be noted that, optionally, the second communication device may alternatively indicate, by using the first message, the first communication device to switch from the first mode to the second mode. That is, the second communication device may request or configure the at least one piece of sensing information for the terminal device and indicate the first communication device to switch from the first mode to the second mode by using a same message or different messages.

Based on 402c, optionally, step 402 specifically includes:
The first communication device transmits the first signal in the second mode to the target sensing region based on the at least one piece of sensing information.

Specifically, the first communication device may switch from the first mode to the second mode, and transmit the first signal in the second mode to the target sensing region based on the at least one piece of sensing information.

403: The second communication device receives a first echo signal from the target sensing region.

The first echo signal is a multipath signal generated by performing a combination of a plurality of physical phenomena such as reflection, refraction, and/or scattering on the first signal by the target sensing region.

It should be noted that, optionally, a receive antenna array used by the second communication device to receive the first echo signal includes a phased array and a digital array.

404: The second communication device senses the target sensing region based on the at least one piece of sensing information and the first echo signal.

That the second communication device senses the target sensing region based on the at least one piece of sensing information and the first echo signal includes at least one of the following: feature measurement performed by the second communication device on the target sensing region, and imaging processing performed by the second communication device on the target sensing region. The feature measurement includes range finding, speed measurement, location positioning, and the like performed on a target object in the target sensing region.

Optionally, the second communication device receives the first echo signal for a plurality of times during movement, to form a first virtual receive array. For example, the second communication device periodically receives the first echo signal during movement, to form the first virtual receive array. That is, each time the second communication device receives the first echo signal during movement, it may be considered that one or more virtual receive array elements exist at a location at which the second communication device is located. The second communication device receives the first echo signal for a plurality of times during movement, to form the virtual receive array similar to a synthetic aperture array. A quantity of virtual array elements of a receive antenna is effectively increased, and an aperture of the virtual receive array is increased. This helps improve the sensing precision of the second communication device for the target sensing region. The quantity of required real-aperture array elements is reduced, and the hardware costs are reduced.

For example, as shown in FIG. 5(a), the base station receives the first echo signal. The base station senses the target sensing region based on the at least one piece of sensing information and the first echo signal. Specifically, the attitude information and the movement trajectory of the user holding the terminal device determine an arrangement manner of the virtual transmit array formed by the terminal device in a process of transmitting the first signal. For example, when the user holds the terminal device and moves in a horizontal direction to form a virtual transmit array, a resolution capability of the virtual transmit array in an azimuth direction (horizontal direction) is significantly improved. When the user holds the terminal device and moves in a vertical direction to form a virtual transmit array, a resolution capability of the virtual transmit array in an elevation direction (altitude) is significantly improved. A more stable movement trajectory and a longer movement range indicate a larger aperture of the formed virtual transmit array and greater improvement of the sensing performance. The antenna array deployed in the first communication device is usually an omnidirectional array. However, when the user holds the first communication device, a case in which some regions are blocked by the body of the user may exist, and the regions in this direction cannot be sensed. Specifically, the second communication device may determine, by using the antenna direction information, the regions that cannot be sensed. The base station may determine, based on the at least one piece of sensing information, an arrangement manner, a location, and the like of the virtual transmit array formed by the terminal device. Then, the base station parses the first echo signal with reference to the arrangement manner, the location, and the like of the virtual transmit array, to obtain a characteristic of signal propagation space, and implement sensing of the target sensing region.

It may be learned that the second communication device senses the target sensing region based on the at least one piece of sensing information and the first echo signal. In the technical solutions of this application, the first communication device is used to assist in sensing the target sensing region, and the second communication device may implement sensing of the target sensing region by receiving the first echo signal. That is, a bistatic (a transmit end and a receive end are disposed at different geographical locations) solution is used to expand an aperture of a virtual array and improve sensing precision. The terminal device transmits the first signal for a plurality of times (for example, periodically) during movement, to form the virtual transmit array similar to a synthetic aperture array. A quantity of virtual array elements of the transmit antenna is effectively increased, and an aperture of the virtual transmit array is increased. This helps improve the sensing precision of the second communication device for the target sensing region. The quantity of required real-aperture array elements is reduced, and the hardware costs are reduced. The at least one piece of sensing information includes the attitude information, the antenna direction information, and the motion location information of the first communication device. The first communication device transmits the first signal to the target sensing region based on the at least one piece of sensing information. The second communication device may sense the target sensing region by using the at least one piece of sensing information and an echo signal of the first signal. This helps improve the sensing precision of the second communication device in sensing the target sensing region, and improve the sensing performance.

In this application, the first communication device may be a terminal device, and the second communication device may be a network device. The network device may obtain the at least one piece of sensing information from the terminal device by using specific signaling, to make full use of a communication capability between the terminal device and the network device. The network device may select a proper terminal device to assist in sensing the target sensing region. Therefore, the technical solutions of this application can implement sensing in different scenarios, sensing in a large scenario range, and sensing in a plurality of scenario directions. This improves flexibility of a scenario to which the solutions are applicable, implements evolution of the integrated sensing and communication network, and effectively reflects integration of a communication technology and a sensing technology.

Optionally, in step 401, an implementation in which the first message is used to configure the at least one piece of sensing information for the first communication device helps the first communication device transmit the first signal to the target sensing region based on the at least one piece of sensing information. This reduces randomness and uncertainty of the sensing information that is of the first communication device and that is obtained by the second communication device, avoids a repeated operation caused by a fact that the attitude information of the first communication device does not meet a sensing requirement in an implementation process, and improves implementation efficiency of the solutions. The first communication device forms a specific virtual transmit array based on the at least one piece of sensing information configured by the second communication device. This reduces a possibility of occurrence of irregular data, repeated data, and invalid data, improves efficiency of obtaining a valid sensing signal by the second communication device, and improves the sensing performance.

For an implementation in which the first message is used to request the at least one piece of sensing information, the second communication device may obtain the at least one piece of sensing information of the first communication device at different moments by performing processes of step 401 and step 402a for a plurality of times. The second communication device may receive echo signals of signals that are transmitted by the first communication device at different moments.

For example, the second communication device may obtain the at least one piece of sensing information that respectively corresponds to a moment T1 and a moment T2 and that is of the first communication device by performing processes of step 401 to step 402a. The second communication device may receive echo signals corresponding to the first signals that are respectively transmitted by the first communication device at the moment T1 and the moment T2. The second communication device senses the target sensing region based on the at least one piece of sensing information corresponding to the first communication device at the moment T1 and the echo signal received by the second communication device at the moment T1. The second communication device senses the target sensing region based on the at least one piece of sensing information corresponding to the first communication device at the moment T2 and the echo signal received by the second communication device at the moment T2.

It should be noted that a quantity of times the second communication device obtains the at least one piece of sensing information of the first communication device may alternatively be less than a quantity of times the second communication device receives the first echo signal.

For example, the second communication device obtains the at least one piece of sensing information corresponding to the first communication device respectively at the moment T1 and the moment T2. The second communication device may receive echo signals corresponding to the first signals that are transmitted by the first communication device respectively at the moment T1, the moment T2, and a moment T3. The second communication device may estimate, based on the at least one piece of sensing information corresponding to the first communication device respectively at the moment T1 and the moment T2, the at least one piece of sensing information corresponding to the first communication device at the moment T3. The second communication device senses the target sensing region based on the at least one piece of sensing information corresponding to the first communication device at the moment T1 and the echo signal received by the second communication device at the moment T1. The second communication device senses the target sensing region based on the at least one piece of sensing information corresponding to the first communication device at the moment T2 and the echo signal received by the second communication device at the moment T2. The second communication device senses the target sensing region based on the estimated at least one piece of sensing information corresponding to the first communication device at the moment T3 and the echo signal received by the second communication device at the moment T3.

With reference to some examples, the following describes a process in which the second communication device senses the target sensing region with reference to the at least one piece of sensing information of the first communication device and the first echo signal.

For example, as shown in FIG. 7(a), the user holds the terminal device based on a specific attitude and antenna direction. The user holds the terminal device to transmit the first signal to the target sensing region during movement based on a specific movement trajectory, so that a direction of a transmit beam of the terminal device directly faces the target sensing region. In addition, the user moves for a specific range while keeping the current attitude of holding the terminal device and the antenna direction. That is, the terminal device transmits the first signal to the target sensing region based on the specific attitude, the antenna direction, and the movement trajectory.

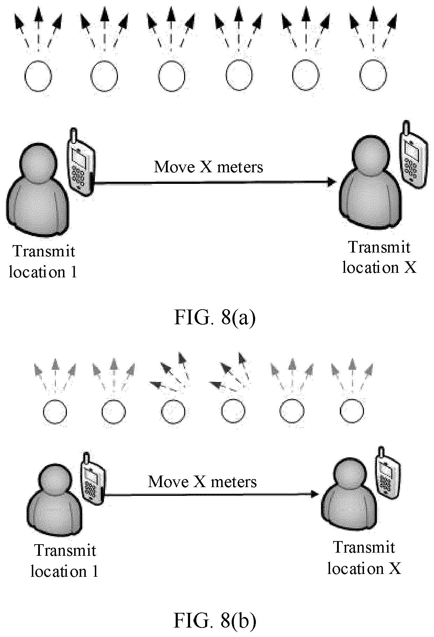

Specifically, a schematic of a movement effect is shown in FIG. 8(a). In this scenario, when the base station processes the first echo signal, there is no phase change that is of data on a receive channel and that is caused by a direction change of an antenna, and there is no need to correct errors such as a phase. That is, the base station may determine, based on the at least one piece of sensing information, an arrangement manner, a location, and the like of the virtual transmit array formed by the terminal device. The base station parses the first echo signal based on the arrangement manner, the location, and the like of the virtual transmit array, to implement sensing of the target sensing region. Therefore, in the implementation in which the base station configures the at least one piece of sensing information of the terminal device by using the first message, the randomness and the uncertainty of the at least one piece of sensing information that is of the first communication device and that is obtained by the second communication device can be avoided. This avoids a repeated operation caused by a fact that the attitude information of the first communication device does not meet a sensing requirement in an implementation process, and improves implementation efficiency of the solutions.

For example, as shown in FIG. 7(b), the user holds the terminal device based on a specific attitude and antenna direction. The user holds the terminal device to transmit the first signal to the target sensing region during movement based on a specific movement trajectory. However, the antenna direction of the terminal device does not necessarily directly face the target sensing region during movement. In addition, because the user holds the terminal device and moves, an attitude in which the user holds the terminal device inevitably changes. For example, the user changes an arm holding the terminal device, tilts the terminal device, or the like, causing the antenna array deployed on the terminal device to tilt or the antenna direction to shift. Generally, a direction of an antenna deployed on the terminal device is limited to a specific angle tilt range. For example, the angle tilt range is from -70° to 70° or from -20° to 20°.

Specifically, a schematic of a movement effect is shown in FIG. 8(b). The attitude in which the user holds the terminal device changes during movement. As a result, the antenna direction of the terminal device does not necessarily directly face the target sensing region. If the base station does not obtain the attitude information and the antenna direction information that are of the terminal device at different moments during movement, and directly senses the target sensing region by using the echo signal, the sensing precision is low, and the sensing performance is poor. Therefore, the base station may obtain the at least one piece of sensing information from the terminal device during movement of the terminal device. Then, the base station processes the at least one piece of sensing information to reconstruct a motion trajectory (including a horizontal trajectory, a vertical trajectory, an antenna direction, and the like) of the terminal device, and may also obtain information such as an elevation-dimensional tilt angle, an azimuth-dimensional tilt angle, and the like of the terminal device. In a process in which the base station senses the target sensing region based on the echo signal, the base station may correct a phase error and amplitude modulation of the echo signal based on the information, or selectively capture a data segment, to implement accurate sensing of the target sensing region by the base station.

If a movement trajectory of the user holding the terminal device is not stable, a location change and an attitude change of the terminal device may occur. The attitude change causes a change in the antenna direction, resulting in large modulation on an amplitude of the echo signal. The location change causes a location error of an antenna phase center of a virtual array, and affects ranges between spatial scattering points and the antenna phase center of the array. Therefore, phases of scattering point echoes change, and the sensing performance is greatly affected.

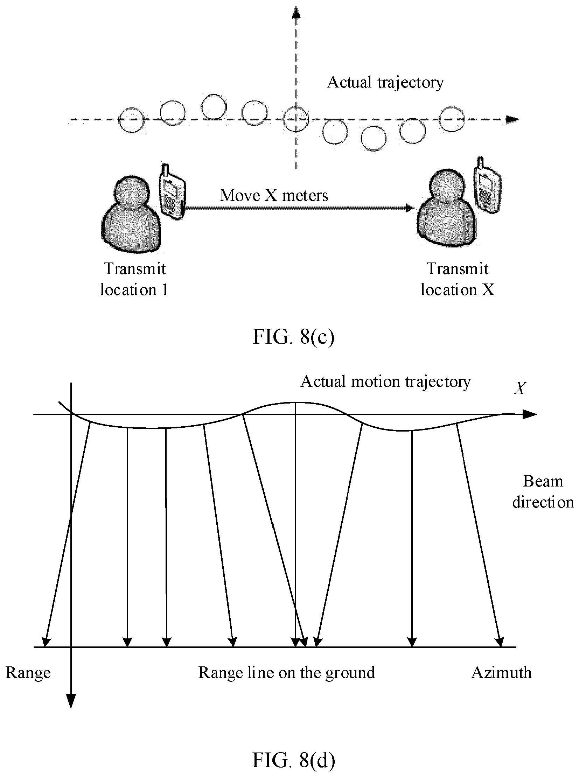

Specifically, schematics of a movement effect are shown in FIG. 8(c) and FIG. 8(d). If there is a great deviation in an actual movement trajectory and an actual antenna direction, but processing is still performed based on the ideal movement trajectory, a sensing result has a large error. Therefore, the base station may obtain the at least one piece of sensing information from the terminal device during movement of the terminal device. Then, the base station processes the at least one piece of sensing information to reconstruct a motion trajectory (including a horizontal trajectory, a vertical trajectory, an antenna direction, and the like) of the terminal device, and may also obtain information such as an elevation-dimensional tilt angle, an azimuth-dimensional tilt angle, and the like of the terminal device. In a process in which the base station senses the target sensing region based on the echo signal, the base station may correct a phase error of the echo signal based on the information, to implement accurate sensing of the target sensing region by the base station.

For example, as shown in FIG. 7(c), when attitude information of the user holding the terminal device changes greatly, the antenna direction of the terminal device deviates greatly, and a beam transmitted by the terminal device already cannot scan the target sensing region. The echo signal reflected by the first signal that is transmitted by the terminal device based on the attitude information, the antenna direction information, and the motion location information belongs to a data segment that cannot be used by the base station. The base station should truncate the data segment of this part. If the base station retains the echo signal and senses by using the echo signal and other echo signals, a sensing effect is poor.

In addition, if the antenna deployed on the terminal is an omnidirectional array, signals transmitted by the terminal device in some directions are blocked by the user. For example, when the user holds a phone for communication, a signal of the terminal in a region on a side facing the user is blocked by the user, and only a signal transmitted by the antenna outwards can radiate the target sensing region. Therefore, the base station needs to obtain the attitude information and the antenna direction information of the terminal device, and sense the target sensing region with reference to the attitude information and the antenna direction information of the terminal device.

405: The first communication device sends a first rejection message to the second communication device.

The first rejection message indicates that the first communication device refuses to feed back the at least one piece of sensing information to the second communication device. Specifically, the first communication device refuses to feed back the at least one piece of sensing information of the first communication device. In this case, the second communication device may reselect another communication device to assist the second communication device in sensing the target sensing region.

In embodiments of this application, the first communication device is used to assist in sensing the target sensing region in the foregoing technical solutions, and the second communication device may implement sensing of the target sensing region by receiving the echo signal of the first signal. That is, a bistatic (a transmit end and a receive end are disposed at different geographical locations) solution is used to increase a quantity of transmit array elements. This helps expand an aperture of a virtual array and improve sensing precision. The terminal device transmits the first signal for a plurality of times (for example, periodically) during movement, to form the virtual transmit array similar to a synthetic aperture array. An aperture of the virtual transmit array is increased. This helps improve the sensing precision of the second communication device for the target sensing region. The quantity of required real-aperture array elements is reduced, and the hardware costs are reduced. The first message is used to request or configure the at least one piece of sensing information, where the at least one piece of sensing information includes the attitude information, the antenna direction information, and the motion location information of the first communication device. The first communication device transmits the first signal to the target sensing region based on the at least one piece of sensing information. For the second communication device, the second communication device may obtain the at least one piece of sensing information, to assist the second communication device in sensing the target sensing region by using the echo signal of the first signal. That is, the second communication device may obtain the at least one piece of sensing information of the first communication device. This helps improve the sensing precision of the second communication device in sensing the target sensing region, and improve the sensing performance.

This application further provides another implementation. If the second communication device can obtain the at least one piece of sensing information of the first communication device by using a capability of the second communication device, the second communication device does not need to exchange with the first communication device. The first communication device transmits the first signal to the target sensing region based on the at least one piece of sensing information of the first communication device. The second communication device receives the first echo signal, and senses the target sensing region based on the at least one piece of sensing information and the first echo signal.

This application further provides another implementation. The second communication device may select a plurality of first communication devices to assist in sensing the target sensing region. The plurality of first communication devices transmit first signals at different moments and at different locations. The plurality of first communication devices transmit the first signals at different moments and at different locations, to jointly form a virtual transmit array. The second communication device senses the target sensing region by receiving echo signals of the first signals that are transmitted by the plurality of first communication devices. An aperture of the virtual transmit array is increased. This helps improve the sensing precision of the second communication device for the target sensing region. The quantity of required real-aperture array elements is reduced, and the hardware costs are reduced.

This application further provides another implementation. A plurality of second communication devices receive, at different locations, the echo signal of the first signal that is transmitted by the first communication device. The plurality of second communication devices receive the echo signal at different locations, to jointly form a virtual receive array. Then, one of the plurality of second communication devices may obtain echo signals received by the plurality of second communication devices, and sense the target sensing region based on the echo signals. An aperture of the virtual receive array is increased. This helps improve the sensing precision of the second communication device for the target sensing region. The quantity of required real-aperture array elements is reduced, and the hardware costs are reduced.

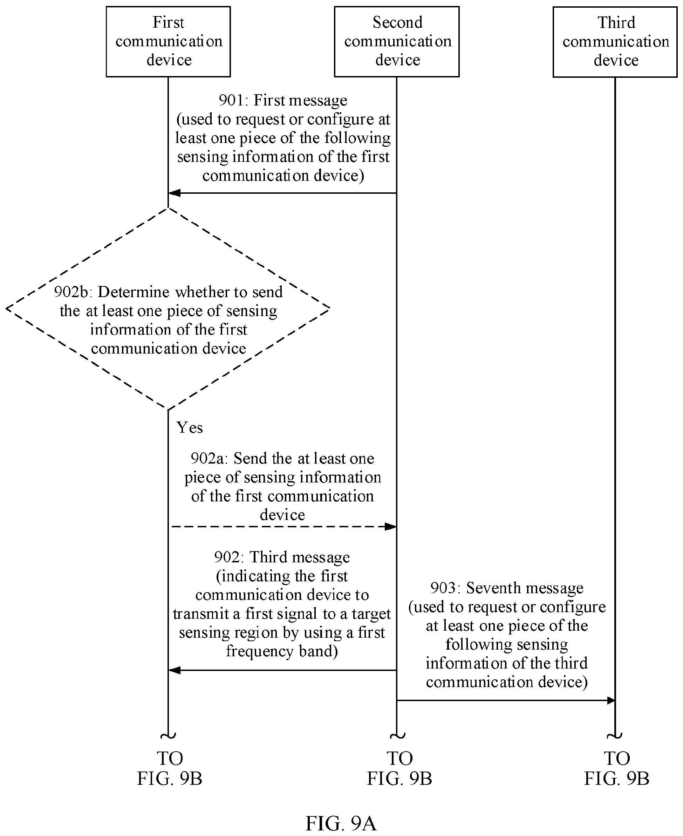

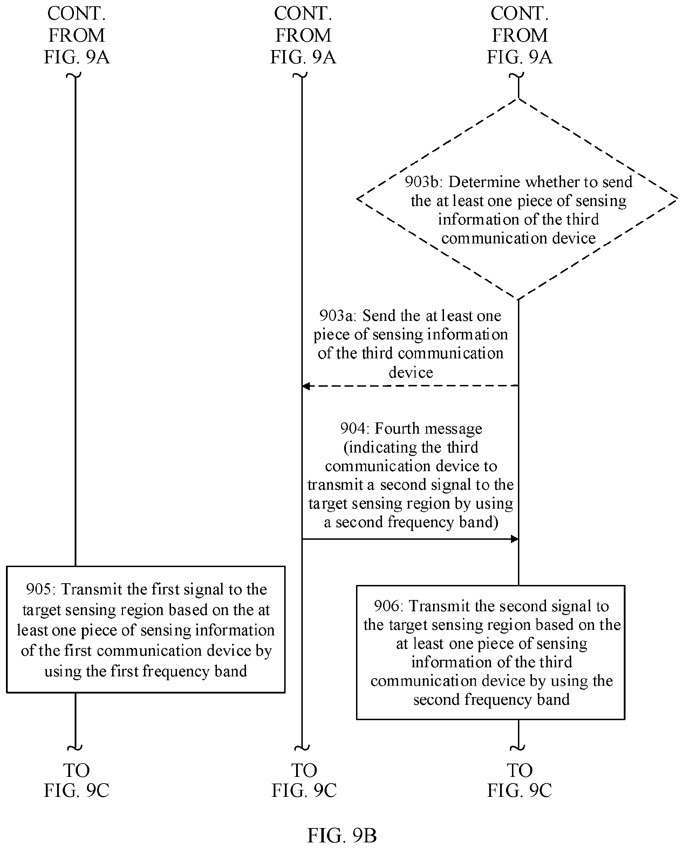

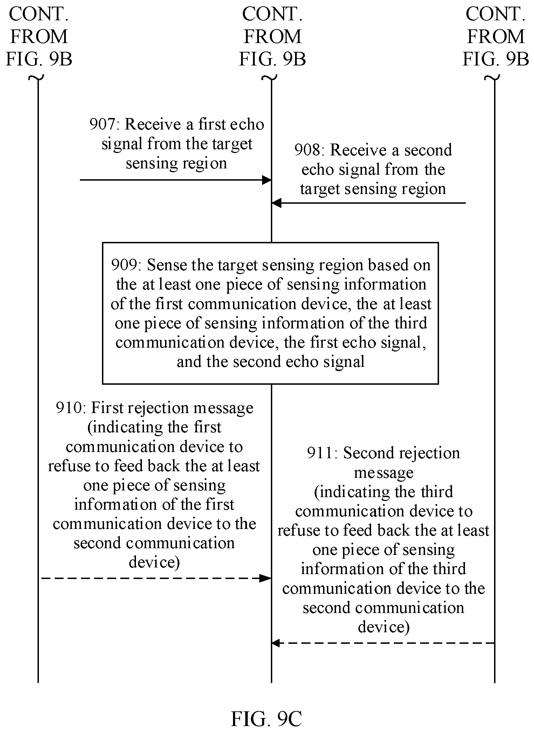

In this application, the second communication device may configure different communication devices to transmit signals to the target sensing region by using different frequency bands, so that the second communication device receives echo signals of the signals that are transmitted by the different communication devices by using the different frequency bands. The second communication device may sense the target sensing region by using these echo signals. This improves the sensing precision and the sensing performance. A description is provided below with reference to an embodiment shown in FIG. 9A to FIG. 9C.

FIG. 9A to FIG. 9C are a schematic of another embodiment of a communication method according to an embodiment of this application. Refer to FIG. 9A to FIG. 9C. The method includes the following steps.

901: A second communication device sends a first message to a first communication device, where the first message is used to request or configure at least one piece of sensing information of the first communication device.

Step 901 is similar to step 401 in the embodiment shown in FIG. 4. For details, refer to related descriptions of step 401 in the embodiment shown in FIG. 4.

Optionally, the embodiment shown in FIG. 9A to FIG. 9C further includes step 902a, and step 902a is performed after step 901.

902a: The first communication device sends the at least one piece of sensing information of the first communication device to the second communication device.

Optionally, the embodiment shown in FIG. 9A to FIG. 9C further includes step 902b, and step 902b may be performed before step 902a.

902b: The first communication device determines whether to send the at least one piece of sensing information of the first communication device. If the first communication device determines to send the at least one piece of sensing information of the first communication device, step 902a is performed; or if the first communication device determines not to send the at least one piece of sensing information of the first communication device, step 910 is performed.

Step 902a and step 902b are similar to step 402a and step 402b in the embodiment shown in FIG. 4. For details, refer to related descriptions of step 402a and step 402b in the embodiment shown in FIG. 4.

902: The second communication device sends a third message to the first communication device, where the third message indicates the first communication device to transmit a first signal to a target sensing region by using a first frequency band.

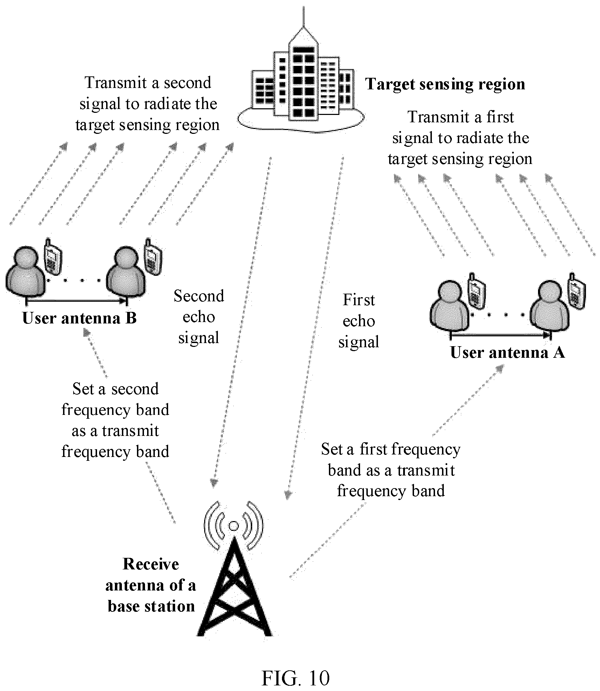

For example, as shown in FIG. 10, a base station sends the third message to a terminal device A, to indicate the terminal device A to use the first frequency band as a transmit frequency band to transmit the first signal.

903: The second communication device sends a seventh message to a third communication device, where the seventh message is used to request or configure at least one piece of sensing information of the third communication device.

Step 903 is similar to step 401 in the embodiment shown in FIG. 4. For details, refer to related descriptions of step 401 in the embodiment shown in FIG. 4.

Optionally, the embodiment shown in FIG. 9A to FIG. 9C further includes step 903a, and step 903a is performed after step 903.

903a: The third communication device sends the at least one piece of sensing information of the third communication device to the second communication device.

Optionally, the embodiment shown in FIG. 9A to FIG. 9C further includes step 903b, and step 903b may be performed after step 903.

903b: The third communication device determines whether to send the at least one piece of sensing information of the third communication device. If the third communication device determines to send the at least one piece of sensing information of the third communication device, step 903a is performed; or if the third communication device determines not to send the at least one piece of sensing information of the third communication device, step 911 is performed.

Step 903a and step 903b are similar to step 402a and step 402b in the embodiment shown in FIG. 4. For details, refer to related descriptions of step 402a and step 402b in the embodiment shown in FIG. 4.

904: The second communication device sends a fourth message to the third communication device, where the fourth message indicates the third communication device to transmit a second signal to the target sensing region by using a second frequency band.

For example, as shown in FIG. 10, the base station sends the fourth message to a terminal device B, where the fourth message indicates the terminal device B to use the second frequency band as a transmit frequency band to transmit the second signal.

It should be noted that there is no fixed execution sequence between step 901 to step 902 and step 903 to step 904. Step 901 to step 902 may be performed before step 903 to step 904; or step 903 to step 904 may be performed before step 901 to step 902; or step 901 to step 902 and step 903 to step 904 may be simultaneously performed based on a situation.

905: The first communication device transmits the first signal to the target sensing region based on the at least one piece of sensing information of the first communication device by using the first frequency band.

A multipath signal generated by performing a combination of a plurality of physical phenomena such as reflection, refraction, and/or scattering on the first signal by the target sensing region is referred to as a first echo signal herein.

The first communication device transmits the first signal to the target sensing region for a plurality of times by using the first frequency band during movement, to form a first virtual transmit array. For example, the first communication device periodically transmits the first signal to the target sensing region by using the first frequency band during movement, to form the first virtual transmit array.

906: The third communication device transmits the second signal to the target sensing region based on the at least one piece of sensing information of the third communication device by using the second frequency band.

A multipath signal generated by performing a combination of a plurality of physical phenomena such as reflection, refraction, and/or scattering on the second signal by the target sensing region is referred to as a second echo signal herein.

The third communication device transmits the second signal to the target sensing region for a plurality of times by using the second frequency band during movement, to form a second virtual transmit array. For example, the third communication device periodically transmits the second signal to the target sensing region by using the second frequency band during movement, to form the second virtual transmit array.

It should be noted that there is no fixed execution sequence between step 905 and step 906. Step 905 may be performed before step 906; or step 906 may be performed before step 905; or step 905 and step 906 may be simultaneously performed based on a situation.

907: The second communication device receives the first echo signal from the target sensing region.

The first echo signal is a multipath signal generated by performing a combination of a plurality of physical phenomena such as reflection, refraction, and/or scattering on the first signal by the target sensing region.

908: The second communication device receives the second echo signal from the target sensing region.

The second echo signal is a multipath signal generated by performing a combination of a plurality of physical phenomena such as reflection, refraction, and/or scattering on the second signal by the target sensing region.

It should be noted that there is no fixed execution sequence between step 907 and step 908. Step 907 may be performed before step 908; or step 908 may be performed before step 907; or step 907 and step 908 may be simultaneously performed based on a situation.

909: The second communication device senses the target sensing region based on the at least one piece of sensing information of the first communication device, the at least one piece of sensing information of the third communication device, the first echo signal, and the second echo signal.

910: The first communication device sends a first rejection message to the second communication device.

Step 910 is similar to step 405 in the embodiment shown in FIG. 4. For details, refer to related descriptions of step 405 in the embodiment shown in FIG. 4. Details are not described herein again.

911: The third communication device sends a second rejection message to the second communication device.

The second rejection message indicates that the third communication device refuses to feed back the at least one piece of sensing information of the third communication device to the second communication device. Specifically, the third communication device refuses to feed back the at least one piece of sensing information of the third communication device. In this case, the second communication device may reselect another communication device to assist the second communication device in sensing the target sensing region.

It may be learned that the base station may configure different terminal devices to transmit signals to the target sensing region by using different frequency bands. An independent bistatic system is formed between the base station and any terminal device. In this case, a multi-static system in which information from a plurality of frequency bands is synthesized may be formed between the base station and the plurality of terminal devices. The base station may sense the target sensing region by using echo signals of the signals that are transmitted by the different terminal devices. For example, the base station may effectively synthesize echo signals of a plurality of frequency bands, so that a bandwidth of a synthesized signal is much greater than that of an original signal. In addition, information carried in the original echo signals of the plurality of frequency bands is also included in the new fused signal. The second communication device implements an ultra-wideband signal by using a multi-frequency band synthesis technology, and multi-frequency band signals that have undergone fusion processing are spliced in terms of frequency and time. The second communication device senses the target sensing region based on the synthesized ultra-wideband signal. The bandwidth of the echo signal directly affects range resolution in a sensing process. Therefore, the second communication device can accurately sense the target sensing region. In addition, the base station may further implement accurate sensing of the target sensing region by parsing reflection characteristics of different frequency bands.

Optionally, the base station may configure a plurality of terminal devices to transmit signals to the target sensing region by using a same frequency band, to further improve an aperture of a virtual array, implement sensing from a plurality of angles, and expand a sensing range.

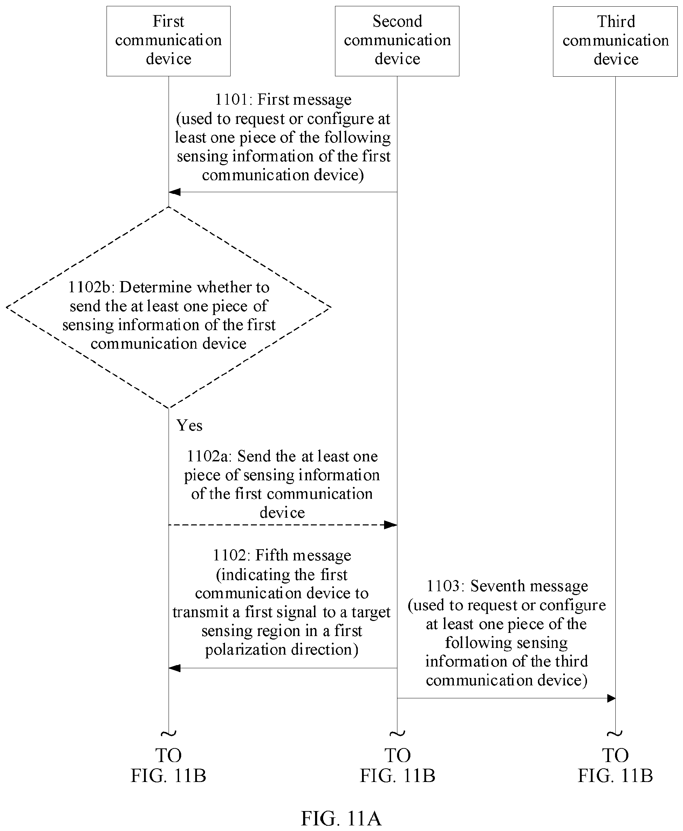

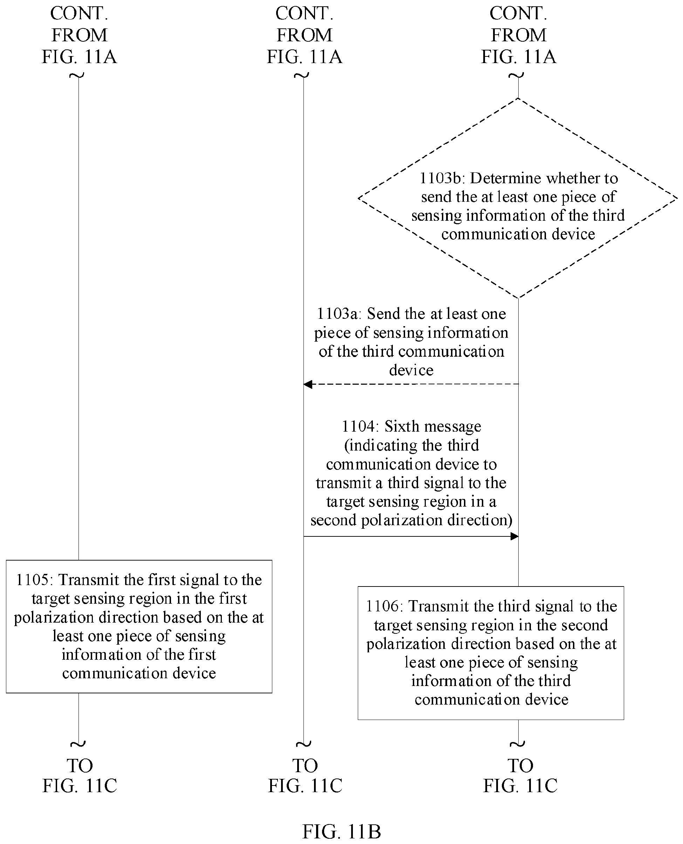

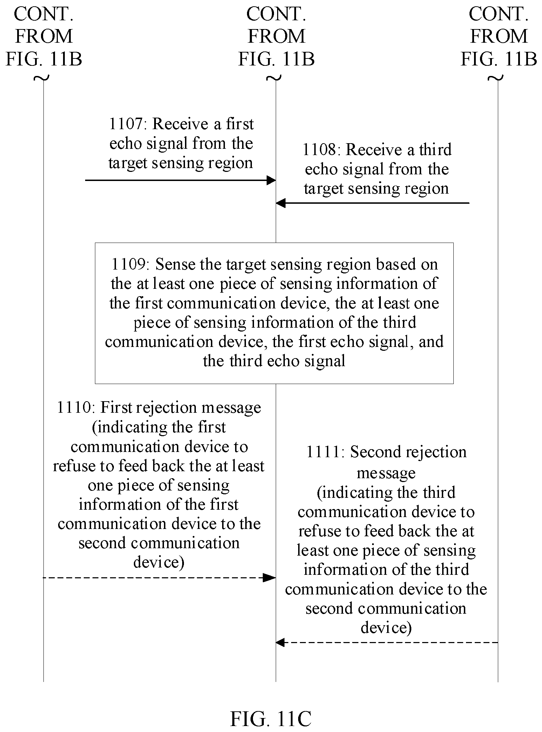

In this application, the second communication device may configure different communication devices to transmit signals to the target sensing region in different polarization directions, so that the second communication device receives echo signals of the signals that are transmitted by the different communication devices in the different polarization directions. The second communication device may sense the target sensing region by using these echo signals. This improves the sensing precision and the sensing performance. A description is provided below with reference to an embodiment shown in FIG. 11A to FIG. 11C.

FIG. 11A to FIG. 11C are a schematic of another embodiment of a communication method according to an embodiment of this application. Refer to FIG. 11A to FIG. 11C. The method includes the following steps.

1101: A second communication device sends a first message to a first communication device, where the first message is used to request or configure at least one piece of sensing information of the first communication device.

Step 1101 is similar to step 401 in the embodiment shown in FIG. 4. For details, refer to related descriptions of step 401 in the embodiment shown in FIG. 4.

Optionally, the embodiment shown in FIG. 11A to FIG. 11C further includes step 1102a, and step 1102a is performed after step 1101.

1102a: The first communication device sends the at least one piece of sensing information of the first communication device to the second communication device.

Optionally, the embodiment shown in FIG. 11A to FIG. 11C further includes step 1102b, and step 1102b may be performed before step 1102a.

1102b: The first communication device determines whether to send the at least one piece of sensing information of the first communication device. If the first communication device determines to send the at least one piece of sensing information of the first communication device, step 1102a is performed; or if the first communication device determines not to send the at least one piece of sensing information of the first communication device, step 1110 is performed.

Step 1102a and step 1102b are similar to step 402a and step 402b in the embodiment shown in FIG. 4. For details, refer to related descriptions of step 402a and step 402b in the embodiment shown in FIG. 4.

1102: The second communication device sends a fifth message to the first communication device, where the fifth message indicates the first communication device to transmit a first signal to a target sensing region in a first polarization direction.

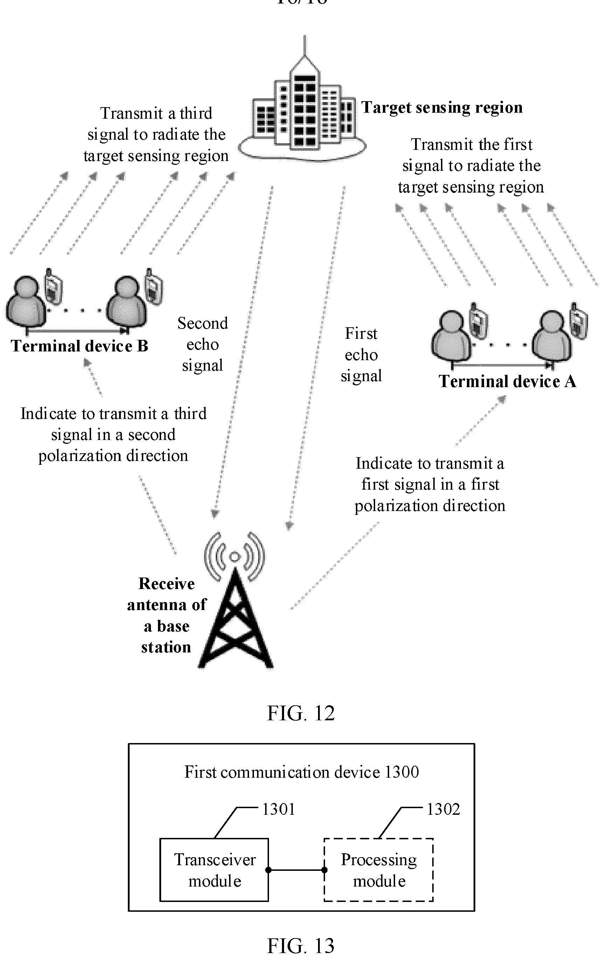

For example, as shown in FIG. 12, a base station sends the fifth message to a terminal device A, where the fifth message indicates the terminal device A to transmit the first signal in the first polarization direction.

1103: The second communication device sends a seventh message to a third communication device, where the seventh message is used to request or configure at least one piece of sensing information of the third communication device.

Step 1103 is similar to step 401 in the embodiment shown in FIG. 4. For details, refer to related descriptions of step 401 in the embodiment shown in FIG. 4.

Optionally, the embodiment shown in FIG. 11A to FIG. 11C further includes step 1103a, and step 1103a is performed after step 1103.

1103a: The third communication device sends the at least one piece of sensing information of the third communication device to the second communication device.

Optionally, the embodiment shown in FIG. 11A to FIG. 11C further includes step 1103b, and step 1103b may be performed after step 1103.

1103b: The third communication device determines whether to send the at least one piece of sensing information of the third communication device. If the third communication device determines to send the at least one piece of sensing information of the third communication device, step 1103a is performed; or if the third communication device determines not to send the at least one piece of sensing information of the third communication device, step 1111 is performed.

Step 1103a and step 1103b are similar to step 402a and step 402b in the embodiment shown in FIG. 4. For details, refer to related descriptions of step 402a and step 402b in the embodiment shown in FIG. 4.

1104: The second communication device sends a sixth message to the third communication device, where the sixth message indicates the third communication device to transmit a second signal to the target sensing region in a second polarization direction.

For example, as shown in FIG. 12, the base station sends the sixth message to a terminal device B, where the sixth message indicates the terminal device B to transmit a third signal in the second polarization direction.

It should be noted that there is no fixed execution sequence between step 1101 to step 1102 and step 1103 to step 1104. Step 1101 to step 1102 may be performed before step 1103 to step 1104; or step 1103 to step 1104 may be performed before step 1101 to step 1102; or step 1101 to step 1102 and step 1103 to step 1104 may be simultaneously performed based on a situation.

1105: The first communication device transmits the first signal to the target sensing region in the first polarization direction based on the at least one piece of sensing information of the first communication device.

The first signal is reflected, refracted, or scattered by the target sensing region, to obtain a first echo signal. The first communication device transmits the first signal to the target sensing region for a plurality of times in the first polarization direction during movement, to form a first virtual transmit array.

For example, the first communication device periodically transmits the first signal to the target sensing region in the first polarization direction during movement, to form the first virtual transmit array.

1106: The third communication device transmits the third signal to the target sensing region in the second polarization direction based on the at least one piece of sensing information of the third communication device.

The third signal is reflected, refracted, or scattered by the target sensing region, to obtain a third echo signal. The third communication device transmits the third signal to the target sensing region for a plurality of times in the second polarization direction during movement, to form a third virtual transmit array.

For example, the third communication device periodically transmits the third signal to the target sensing region in the second polarization direction during movement, to form the third virtual transmit array.

1107: The second communication device receives the first echo signal from the target sensing region.

The first echo signal is a multipath signal generated by performing a combination of a plurality of physical phenomena such as reflection, refraction, and/or scattering on the first signal by the target sensing region.

1108: The second communication device receives the third echo signal from the target sensing region.

The third echo signal is a multipath signal generated by performing a combination of a plurality of physical phenomena such as reflection, refraction, and/or scattering on the third signal by the target sensing region.

It should be noted that there is no fixed execution sequence between step 1107 and step 1108. Step 1107 may be performed before step 1108; or step 1108 may be performed before step 1107; or step 1107 and step 1108 may be simultaneously performed based on a situation.

1109: The second communication device senses the target sensing region based on the at least one piece of sensing information of the first communication device, the at least one piece of sensing information of the third communication device, the first echo signal, and the third echo signal.

It may be learned that the base station may configure different terminal devices to transmit signals to the target sensing region in different polarization directions. An independent bistatic system is formed between the base station and any terminal device. In this case, a multi-static system in which information from a plurality of frequency bands is synthesized may be formed between the base station and the plurality of terminal devices. The base station may sense the target sensing region by using echo signals of the signals that are transmitted by the different terminal devices.

1110: The first communication device sends a first rejection message to the second communication device.

Step 1110 is similar to step 405 in the embodiment shown in FIG. 4. For details, refer to related descriptions of step 405 in the embodiment shown in FIG. 4. Details are not described herein again.

1111: The third communication device sends a second rejection message to the second communication device.

Step 1111 is similar to step 911 in the embodiment shown in FIG. 9A to FIG. 9C. For details, refer to related descriptions of step 911 in the embodiment shown in FIG. 9A to FIG. 9C. Details are not described herein again.

The following describes a first communication device provided in an embodiment of this application. FIG. 13 is a schematic of a structure of a first communication device according to an embodiment of this application. The first communication device may be configured to perform the steps performed by the first communication device in embodiments shown in FIG. 4, FIG. 9A to FIG. 9C, and FIG. 11A to FIG. 11C. For details, refer to related descriptions in the foregoing method embodiments.

The first communication device includes a transceiver module 1301. Optionally, the first communication device further includes a processing module 1302.

The transceiver module 1301 is configured to: receive a first message from a second communication device, where the first message is used to request or configure at least one piece of sensing information, and the at least one piece of sensing information includes attitude information, antenna direction information, and motion location information of the first communication device; and transmit a first signal to a target sensing region based on the at least one piece of sensing information.

In a possible implementation, the transceiver module 1301 is further configured to:
send the at least one piece of sensing information to the second communication device.

In another possible implementation, the first message further includes precision requirement information. The precision requirement information indicates a precision requirement for the attitude information and the antenna direction information. The attitude information and the antenna direction information that are sent by the first communication device to the second communication device meet the precision requirement.

In another possible implementation, the first message is used to request the at least one piece of sensing information; and the first communication device further includes the processing module 1302.

The processing module 1302 is configured to: determine whether to send the at least one piece of sensing information. If the processing module 1302 determines to send the at least one piece of sensing information, an action of sending, by the first communication device, the at least one piece of sensing information to the second communication device is performed.

In another possible implementation, the transceiver module 1301 is further configured to:
receive a second message sent by the second communication device, where the second message indicates the first communication device to switch from a first mode to a second mode, a signal in the first mode is a communication signal, and a signal in the second mode is a sensing signal or an integrated sensing and communication signal; and
the transceiver module 1301 is specifically configured to:
   transmit the first signal to the target sensing region in the second mode based on the at least one piece of sensing information.

In another possible implementation, the first message is further used to configure a periodicity for transmitting the first signal by the first communication device; and
the transceiver module 1301 is specifically configured to:
transmit the first signal to the target sensing region based on the at least one piece of sensing information by using the periodicity.

In another possible implementation, the transceiver module 1301 is further configured to:
receive a third message from the second communication device, where the third message indicates the first communication device to transmit the first signal to the target sensing region by using a first frequency band; and
the transceiver module 1301 is specifically configured to:
   transmit the first signal to the target sensing region based on the at least one piece of sensing information by using the first frequency band.

In another possible implementation, the transceiver module 1301 is further configured to:
receive a fifth message from the second communication device, where the fifth message indicates the first communication device to transmit the first signal to the target sensing region in a first polarization direction; and
the transceiver module 1301 is specifically configured to:
   transmit the first signal to the target sensing region based on the at least one piece of sensing information and the first polarization direction.

In another possible implementation, the first communication device transmits the first signal to the target sensing region for a plurality of times during movement, to form a first virtual transmit array.

In another possible implementation, the first communication device is a terminal device, and the second communication device is a network device.

In this embodiment of this application, the transceiver module 1301 is configured to: receive the first message from the second communication device, where the first message is used to request or configure the at least one piece of sensing information, and the at least one piece of sensing information includes the attitude information, the antenna direction information, and the motion location information of the first communication device; and transmit the first signal to the target sensing region based on the at least one piece of sensing information. The second communication device uses the first communication device to assist in sensing the target sensing region, and the second communication device may implement sensing of the target sensing region by receiving an echo signal of the first signal. That is, a bistatic (a transmit end and a receive end are disposed at different geographical locations) solution is used to expand an aperture of a virtual array and improve sensing precision. For the second communication device, the at least one piece of sensing information may assist the second communication device in sensing the target sensing region. This helps improve sensing precision of the second communication device in sensing the target sensing region, and improve sensing performance.

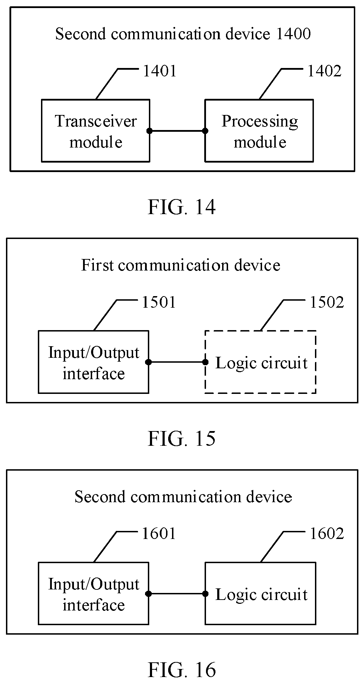

The following describes a second communication device provided in an embodiment of this application. FIG. 14 is a schematic of a structure of a second communication device according to an embodiment of this application. The second communication device may be configured to perform the steps performed by the second communication device in embodiments shown in FIG. 4, FIG. 9A to FIG. 9C, and FIG. 11A to FIG. 11C. For details, refer to related descriptions in the foregoing method embodiments.

The second communication device includes a transceiver module 1401 and a processing module 1402.

The transceiver module 1401 is configured to: send a first message to a first communication device, where the first message is used to request or configure at least one piece of sensing information, and the at least one piece of sensing information includes attitude information, antenna direction information, and motion location information of the first communication device; and receive a first echo signal from a target sensing region, where the first echo signal is obtained by reflecting, by the target sensing region, a first signal that is transmitted by the first communication device to the target sensing region based on the at least one piece of sensing information.

The processing module 1402 is configured to sense the target sensing region based on the at least one piece of sensing information and the first echo signal.

In a possible implementation, the transceiver module 1401 is further configured to:
receive the at least one piece of sensing information from the first communication device.

In another possible implementation, the first message further includes precision requirement information. The precision requirement information indicates a precision requirement for the attitude information and the antenna direction information. The attitude information and the antenna direction information that are sent by the first communication device to the second communication device meet the precision requirement.

In another possible implementation, the transceiver module 1401 is further configured to:
send a second message to the first communication device, where
the second message indicates the first communication device to switch from a first mode to a second mode, a signal in the first mode is a communication signal, and a signal in the second mode is a sensing signal or an integrated sensing and communication signal.

In another possible implementation, the first message is further used to configure a periodicity for transmitting the first signal by the first communication device.

In another possible implementation, the transceiver module 1401 is further configured to:
send a third message to the first communication device, where the third message indicates the first communication device to transmit the first signal to the target sensing region by using a first frequency band; send a fourth message to a third communication device, where the fourth message indicates the third communication device to transmit a second signal to the target sensing region by using a second frequency band; and receive a second echo signal from the target sensing region, where the second echo signal is obtained by reflecting, by the target sensing region, the second signal that is transmitted by the third communication device to the target sensing region by using the second frequency band; and
the processing module 1402 is specifically configured to:
   sense the target sensing region based on the at least one piece of sensing information, the first echo signal, and the second echo signal.

In another possible implementation, the transceiver module 1401 is further configured to:
send a fifth message to the first communication device, where the fifth message indicates the first communication device to transmit the first signal to the target sensing region in a first polarization direction; send a sixth message to the third communication device, where the sixth message indicates the third communication device to transmit a third signal to the target sensing region in a second polarization direction; and receive a third echo signal from the target sensing region, where the third echo signal is obtained by reflecting, by the target sensing region, the third signal that is transmitted by the third communication device to the target sensing region in the second polarization direction; and
the processing module 1402 is specifically configured to:
   sense the target sensing region based on the at least one piece of sensing information, the first echo signal, and the third echo signal.

In another possible implementation, the first communication device transmits the first signal to the target sensing region for a plurality of times during movement, to form a first virtual transmit array.

In another possible implementation, the second communication device forms a first virtual receive array in a process of receiving the first echo signal for a plurality of times during movement.

In another possible implementation, the first communication device is a terminal device, and the second communication device is a network device.

In this embodiment of this application, the transceiver module 1401 is configured to: send the first message to the first communication device, where the first message is used to request or configure the at least one piece of sensing information, and the at least one piece of sensing information includes the attitude information, the antenna direction information, and the motion location information of the first communication device; and receive the first echo signal from the target sensing region, where the first echo signal is obtained by reflecting, by the target sensing region, the first signal that is transmitted by the first communication device to the target sensing region based on the at least one piece of sensing information. The processing module 1402 is configured to sense the target sensing region based on at least one piece of sensing information and the first echo signal. In this way, the second communication device accurately senses the target sensing region, and sensing performance is improved.

FIG. 15 is a schematic of another structure of a first communication device according to an embodiment of this application. Refer to FIG. 15. The first communication device includes an input/output interface 1501. Optionally, the first communication device further includes a logic circuit 1502. The first communication device shown in FIG. 15 may be configured to perform the steps performed by the first communication device in embodiments shown in FIG. 4, FIG. 9A to FIG. 9C, and FIG. 11A to FIG. 11C.

Optionally, the logic circuit 1502 may have a function of the processing module 1302 in the embodiment shown in FIG. 13. The input/output interface 1501 may have a function of the transceiver module 1301 in the embodiment shown in FIG. 13.

The first communication device shown in FIG. 15 may perform the technical solutions shown in the foregoing method embodiments. Implementation principles and beneficial effects thereof are similar to those of the foregoing method embodiments. Details are not described herein again.

FIG. 16 is a schematic of another structure of a second communication device according to an embodiment of this application. Refer to FIG. 16. The second communication device includes an input/output interface 1601 and a logic circuit 1602. The second communication device shown in FIG. 16 may be configured to perform the steps performed by the second communication device in embodiments shown in FIG. 4, FIG. 9A to FIG. 9C, and FIG. 11A to FIG. 11C.

Optionally, the logic circuit 1602 may have a function of the processing module 1402 in the embodiment shown in FIG. 14. The input/output interface 1601 may have a function of the transceiver module 1401 in the embodiment shown in FIG. 14.

The second communication device shown in FIG. 16 may perform the technical solutions shown in the foregoing method embodiments. Implementation principles and beneficial effects thereof are similar to those of the foregoing method embodiments. Details are not described herein again.

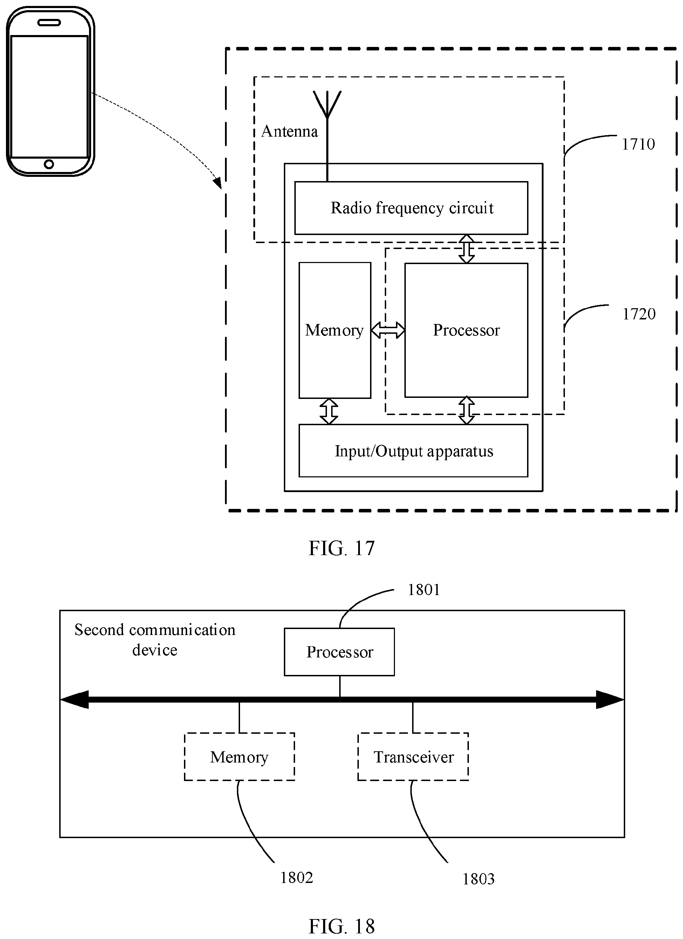

The following shows a schematic of a possible structure in which a first communication device is a terminal device with reference to FIG. 17.

FIG. 17 is a simplified schematic of a structure of a terminal device. For ease of understanding and figure illustration, an example in which the terminal device is a mobile phone is used in FIG. 17. As shown in FIG. 17, the terminal device includes a processor, a memory, a radio frequency circuit, an antenna, and an input/output apparatus.

The processor is mainly configured to process a communication protocol and communication data, control the terminal device, execute a software program, process data of the software program, and the like.

The memory is mainly configured to store a software program and data. The radio frequency circuit is mainly configured to perform conversion between a baseband signal and a radio frequency signal, and process the radio frequency signal. The antenna is mainly configured to receive and send a radio frequency signal in a form of an electromagnetic wave.

The input/output apparatus, such as a touchscreen, a display, or a keyboard, is mainly configured to: receive data input by a user and output data to the user. It should be noted that terminal devices of some types may have no input/output apparatus.

When data needs to be sent, the processor performs baseband processing on the to-be-sent data, and then outputs a baseband signal to the radio frequency circuit. After performing radio frequency processing on the baseband signal, the radio frequency circuit sends a radio frequency signal in a form of an electromagnetic wave to the outside through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

For ease of description, FIG. 17 shows only one memory and one processor. In an actual terminal device product, there may be one or more processors and one or more memories. The memory may also be referred to as a storage medium, a storage device, or the like. The memory may be deployed independent of the processor, or may be integrated with the processor. This is not limited in embodiments of this application.

In this embodiment of this application, the antenna and the radio frequency circuit that have sending and receiving functions may be considered as a transceiver unit of the terminal device, and the processor that has a processing function may be considered as a processing unit of the terminal device. As shown in FIG. 17, the terminal device includes a transceiver unit 1710 and a processing unit 1720. The transceiver unit may also be referred to as a transceiver, a transceiver machine, a transceiver apparatus, or the like. The processing unit may also be referred to as a processor, a processing board, a processing module, a processing apparatus, or the like. Optionally, a device that is in the transceiver unit 1710 and that is configured to implement a receiving function may be considered as a receiving unit, and a device that is in the transceiver unit 1710 and that is configured to implement a sending function may be considered as a sending unit. In other words, the transceiver unit 1710 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitter machine, a transmitter, a transmitter circuit, or the like.

It should be understood that the transceiver unit 1710 is configured to perform a sending operation and a receiving operation of the first communication device in the foregoing method embodiments, and the processing unit 1720 is configured to perform an operation other than the receiving/sending operation of the first communication device in the foregoing method embodiments.

When the terminal device is a chip, the chip includes a transceiver unit and a processing unit. The transceiver unit may be an input/output circuit or a communication interface. The processing unit is a processor, a microprocessor, an integrated circuit, or a logic circuit integrated on the chip.

This application further provides a second communication device. FIG. 18 is a schematic of another structure of a second communication device according to an embodiment of this application. The second communication device may be configured to perform the steps performed by the second communication device in embodiments shown in FIG. 4, FIG. 9A to FIG. 9C, and FIG. 11A to FIG. 11C. For details, refer to related descriptions in the foregoing method embodiments.

The second communication device includes a processor 1801. Optionally, the second communication device further includes a memory 1802 and a transceiver 1803.

In a possible implementation, the processor 1801, the memory 1802, and the transceiver 1803 are connected through a bus, and the memory stores computer instructions.

The processing module 1402 in the foregoing embodiments may be specifically the processor 1801 in this embodiment. Therefore, specific implementation of the processor 1801 is not described again. The transceiver module 1401 in the foregoing embodiments may be specifically the transceiver 1803 in this embodiment. Therefore, specific implementation of the transceiver 1803 is not described again.

An embodiment of this application further provides a communication system. The communication system includes the first communication device shown in FIG. 13 and the second communication device shown in FIG. 14. The first communication device shown in FIG. 13 may be configured to perform all or some of the steps performed by the first communication device in embodiments shown in FIG. 4, FIG. 9A to FIG. 9C, and FIG. 11A to FIG. 11C. The second communication device shown in FIG. 14 may be configured to perform all or some of the steps performed by the second communication device in embodiments shown in FIG. 4, FIG. 9A to FIG. 9C, and FIG. 11A to FIG. 11C.

An embodiment of this application further provides a computer program product including instructions. When the computer program product is run on a computer, the computer is enabled to perform the communication methods in embodiments shown in FIG. 4, FIG. 9A to FIG. 9C, and FIG. 11A to FIG. 11C.

An embodiment of this application further provides a computer-readable storage medium, including computer instructions. When the computer instructions are run on a computer, the computer is enabled to perform the communication methods in embodiments shown in FIG. 4, FIG. 9A to FIG. 9C, and FIG. 11A to FIG. 11C.

An embodiment of this application further provides a chip apparatus, including a processor. The processor is configured to: connect to a memory, and invoke a program stored in the memory, to enable the processor to perform the communication methods in embodiments shown in FIG. 4, FIG. 9A to FIG. 9C, and FIG. 11A to FIG. 11C.

The processor mentioned above may be a general-purpose central processing unit, a microprocessor, an application-specific integrated circuit (application-specific integrated circuit, ASIC), or one or more integrated circuits for controlling program execution of the communication methods in embodiments shown in FIG. 4, FIG. 9A to FIG. 9C, and FIG. 11A to FIG. 11C. The memory mentioned above may be a read-only memory (read-only memory, ROM), another type of static storage device capable of storing static information and instructions, a random access memory (random access memory, RAM), or the like.

It may be clearly understood by persons skilled in the art that, for the purpose of convenient and brief description, for a detailed working process of the foregoing systems, apparatuses, and units, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

In this application, unless otherwise specified, for same or similar parts in embodiments, refer to each other. In embodiments of this application and the implementations/implementation methods in embodiments, unless otherwise specified or there is a logic conflict, terms and/or descriptions are consistent and may be mutually referenced between different embodiments and between the implementations/implementation methods in embodiments. Technical features in different embodiments and the implementations/implementation methods in embodiments may be combined based on an internal logical relationship thereof, to form a new embodiment, implementation, or implementation method. The following implementations of this application are not intended to limit the protection scope of this application.

The foregoing embodiments are merely intended for describing the technical solutions of this application, rather than limiting this application.

## Claims

1. A communication method, wherein the method is applied to a first apparatus and the method comprises:
receiving (401) a first message from a second apparatus, wherein the first message is used to request or configure at least one piece of sensing information, and the at least one piece of sensing information comprises attitude information, and motion location information of the first apparatus; wherein the attitude information represents a three-dimensional location of the first apparatus and determines an array structure and an orientation angle of an antenna array when scanning; wherein the motion location information of the first apparatus includes motion parameter information of the first apparatus and/or spatial location information of the first apparatus; and
transmitting (402) a first signal to a target sensing region based on the at least one piece of sensing information.

2. The method according to claim 1, further comprising:
sending the at least one piece of sensing information to the second apparatus.

3. The method according to claim 2, wherein the first message is further used to request precision requirement information, and the precision requirement information indicates a precision requirement for the attitude information; and
the attitude information that is sent by the first apparatus to the second apparatus meets the precision requirement.

4. The method according to claim 2 or 3, wherein the first message is used to request the at least one piece of sensing information, and the method further comprises:
determining whether to send the at least one piece of sensing information; and
if the first apparatus determines to send the at least one piece of sensing information, performing an action of sending the at least one piece of sensing information to the second apparatus.

5. The method according to any one of claims 1 to 4, further comprising:
receiving a second message sent by the second apparatus, wherein
the second message indicates the first apparatus to switch from a first mode to a second mode, a signal in the first mode is a communication signal, and a signal in the second mode is a sensing signal or an integrated sensing and communication signal; and
the transmitting a first signal to a target sensing region based on the at least one piece of sensing information comprises:
transmitting the first signal to the target sensing region in the second mode based on the at least one piece of sensing information.

6. The method according to any one of claims 1 to 5, wherein the first message is further used to configure a periodicity for transmitting the first signal by the first apparatus; and
the transmitting a first signal to a target sensing region based on the at least one piece of sensing information comprises:
transmitting the first signal to the target sensing region based on the at least one piece of sensing information by using the periodicity.

7. The method according to any one of claims 1 to 6, wherein the method further comprises:
receiving a third message from the second apparatus, wherein the third message indicates the first apparatus to transmit the first signal to the target sensing region by using a first frequency band; and
the transmitting a first signal to a target sensing region based on the at least one piece of sensing information comprises:
transmitting the first signal to the target sensing region based on the at least one piece of sensing information by using the first frequency band.

8. The method according to any one of claims 1 to 6, wherein the method further comprises:
receiving a fifth message from the second apparatus, wherein the fifth message indicates the first apparatus to transmit the first signal to the target sensing region in a first polarization direction; and
the transmitting a first signal to a target sensing region based on the at least one piece of sensing information comprises:
transmitting the first signal to the target sensing region based on the at least one piece of sensing information and the first polarization direction.

9. The method according to any one of claims 1 to 8, wherein the first apparatus transmits the first signal to the target sensing region for a plurality of times during movement, to form a first virtual transmit array.

10. A communication method, wherein the method is applicable to a second apparatus and the method comprises:
sending (401) a first message to a first apparatus, wherein the first message is used to request or configure at least one piece of the following sensing information, and the at least one piece of sensing information comprises attitude information, and motion location information of the first apparatus; wherein the attitude information represents a three-dimensional location of the first apparatus and determines an array structure and an orientation angle of an antenna array when scanning; wherein the motion location information of the first apparatus includes motion parameter information of the first apparatus and/or spatial location information of the first apparatus;
receiving a first echo signal from a target sensing region, wherein the first echo signal is obtained by reflecting, by the target sensing region, a first signal that is transmitted by the first apparatus to the target sensing region based on the at least one piece of sensing information; and
sensing the target sensing region based on the at least one piece of sensing information and the first echo signal.

11. An apparatus, comprising an input/output interface, and the input/output interface is configured to perform sending and receiving operations in the method according to any one of claims 1 to 10.

12. The apparatus according to claim 11, wherein the apparatus further comprises a logic circuit, and the logic circuit is configured to perform a processing operation in the method according to any one of claims 1 to 10.

13. A computer-readable storage medium, comprising computer instructions, wherein when the computer instructions are run on a computer, the computer is enabled to perform the method according to any one of claims 1 to 10.

14. A computer program product, comprising computer-executable instructions, wherein when the computer-executable instructions are run on a computer, the computer is enabled to perform the method according to any one of claims 1 to 10.

## Patentansprüche

1. Kommunikationsverfahren, wobei das Verfahren auf eine erste Einrichtung angewandt wird und das Verfahren Folgendes umfasst:
Empfangen (401) einer ersten Nachricht von einer zweiten Einrichtung, wobei die erste Nachricht dazu verwendet wird, mindestens ein Erfassungsinformationselement anzufordern oder zu konfigurieren, und das mindestens eine Erfassungsinformationselement Haltungsinformationen und Bewegungsortsinformationen der ersten Einrichtung umfasst;
wobei die Haltungsinformationen einen dreidimensionalen Ort der ersten Einrichtung darstellen und eine Arraystruktur und einen Ausrichtungswinkel eines Antennenarrays während einer Abtastung bestimmen; wobei die Bewegungsortsinformationen der ersten Einrichtung Bewegungsparameterinformationen der ersten Einrichtung und/oder räumliche Ortsinformationen der ersten Einrichtung beinhalten; und
Übertragen (402) eines ersten Signals an einen Zielerfassungsbereich basierend auf dem mindestens einen Erfassungsinformationselement.

2. Verfahren nach Anspruch 1, ferner umfassend:
Senden des mindestens einen Erfassungsinformationselements an die zweite Einrichtung.

3. Verfahren nach Anspruch 2, wobei die erste Nachricht ferner dazu verwendet wird, Genauigkeitserfordernisinformationen anzufordern, und die Genauigkeitserfordernisinformationen ein Genauigkeitserfordernis für die Haltungsinformationen angeben; und
die Haltungsinformationen, die durch die erste Einrichtung an die zweite Einrichtung gesendet werden, das Genauigkeitserfordernis erfüllen.

4. Verfahren nach Anspruch 2 oder 3, wobei die erste Nachricht dazu verwendet wird, das mindestens eine Erfassungsinformationselement anzufordern, und das Verfahren ferner Folgendes umfasst:
Bestimmen, ob das mindestens eine Erfassungsinformationselement zu senden ist; und
falls die erste Einrichtung bestimmt, das mindestens eine Erfassungsinformationselement zu senden, Durchführen einer Handlung zum Senden des mindestens einen Erfassungsinformationselements an die zweite Einrichtung.

5. Verfahren nach einem der Ansprüche 1 bis 4, ferner umfassend:
Empfangen einer zweiten Nachricht, die durch die zweite Einrichtung gesendet wird, wobei
die zweite Nachricht der ersten Einrichtung angibt, von einem ersten Modus auf einen zweiten Modus umzuschalten, ein Signal in dem ersten Modus ein Kommunikationssignal ist und ein Signal in dem zweiten Modus ein Erfassungssignal oder ein integriertes Erfassungs- und Kommunikationssignal ist; und
das Übertragen eines ersten Signals an einen Zielerfassungsbereich basierend auf dem mindestens einen Erfassungsinformationselement Folgendes umfasst:
Übertragen des ersten Signals an den Zielerfassungsbereich in dem zweiten Modus basierend auf dem mindestens einen Erfassungsinformationselement.

6. Verfahren nach einem der Ansprüche 1 bis 5, wobei die erste Nachricht ferner dazu verwendet wird, eine Periodizität zum Übertragen des ersten Signals durch die erste Einrichtung zu konfigurieren; und
das Übertragen eines ersten Signals an einen Zielerfassungsbereich basierend auf dem mindestens einen Erfassungsinformationselement Folgendes umfasst:
Übertragen des ersten Signals an den Zielerfassungsbereich basierend auf dem mindestens einen Erfassungsinformationselement unter Verwendung der Periodizität.

7. Verfahren nach einem der Ansprüche 1 bis 6, wobei das Verfahren ferner Folgendes umfasst:
Empfangen einer dritten Nachricht von der zweiten Einrichtung, wobei die dritte Nachricht der ersten Einrichtung angibt, das erste Signal an den Zielerfassungsbereich unter Verwendung eines ersten Frequenzbandes zu übertragen; und
das Übertragen eines ersten Signals an einen Zielerfassungsbereich basierend auf dem mindestens einen Erfassungsinformationselement Folgendes umfasst:
Übertragen des ersten Signals an den Zielerfassungsbereich basierend auf dem mindestens einen Erfassungsinformationselement unter Verwendung des ersten Frequenzbandes.

8. Verfahren nach einem der Ansprüche 1 bis 6, wobei das Verfahren ferner Folgendes umfasst:
Empfangen einer fünften Nachricht von der zweiten Einrichtung, wobei die fünfte Nachricht der ersten Einrichtung angibt, das erste Signal an den Zielerfassungsbereich in einer ersten Polarisationsrichtung zu übertragen; und
das Übertragen eines ersten Signals an einen Zielerfassungsbereich basierend auf dem mindestens einen Erfassungsinformationselement Folgendes umfasst:
Übertragen des ersten Signals an den Zielerfassungsbereich basierend auf dem mindestens einen Erfassungsinformationselement und der ersten Polarisationsrichtung.

9. Verfahren nach einem der Ansprüche 1 bis 8, wobei die erste Einrichtung das erste Signal während einer Bewegung eine Vielzahl von Malen an den Zielerfassungsbereich überträgt, um ein erstes virtuelles Übertragungsarray zu bilden.

10. Kommunikationsverfahren, wobei das Verfahren auf eine zweite Einrichtung anwendbar ist und das Verfahren Folgendes umfasst:
Senden (401) einer ersten Nachricht an eine erste Einrichtung, wobei die erste Nachricht dazu verwendet wird, mindestens ein Element der folgenden Erfassungsinformationen anzufordern oder zu konfigurieren, und das mindestens eine Erfassungsinformationselement Haltungsinformationen und Bewegungsortsinformationen der ersten Einrichtung umfasst;
wobei die Haltungsinformationen einen dreidimensionalen Ort der ersten Einrichtung darstellen und eine Arraystruktur und einen Ausrichtungswinkel eines Antennenarrays während einer Abtastung bestimmen; wobei die Bewegungsortsinformationen der ersten Einrichtung Bewegungsparameterinformationen der ersten Einrichtung und/oder räumliche Ortsinformationen der ersten Einrichtung beinhalten;
Empfangen eines ersten Echosignals von einem Zielerfassungsbereich, wobei das erste Echosignal durch Reflektieren, durch den Zielerfassungsbereich, eines ersten Signals erlangt wird, das durch die erste Einrichtung basierend auf dem mindestens einen Erfassungsinformationselement an den Zielerfassungsbereich übertragen wird; und
Erfassen des Zielerfassungsbereichs basierend auf dem mindestens einen Erfassungsinformationselement und dem ersten Echosignal.

11. Einrichtung, umfassend eine Eingabe-/Ausgabeschnittstelle, und wobei die Eingabe-/Ausgabeschnittstelle dazu konfiguriert ist, Sende- und Empfangsvorgänge in dem Verfahren nach einem der Ansprüche 1 bis 10 durchzuführen.

12. Einrichtung nach Anspruch 11, wobei die Einrichtung ferner eine Logikschaltung umfasst und die Logikschaltung dazu konfiguriert ist, einen Verarbeitungsvorgang in dem Verfahren nach einem der Ansprüche 1 bis 10 durchzuführen.

13. Computerlesbares Speichermedium, umfassend Computeranweisungen, wobei, wenn die Computeranweisungen auf einem Computer ausgeführt werden, es dem Computer ermöglicht wird, das Verfahren nach einem der Ansprüche 1 bis 10 durchzuführen.

14. Computerprogrammprodukt, umfassend computerausführbare Anweisungen, wobei, wenn die computerausführbaren Anweisungen auf einem Computer ausgeführt werden, es dem Computer ermöglicht wird, das Verfahren nach einem der Ansprüche 1 bis 10 durchzuführen.

## Revendications

1. Procédé de communication, dans lequel le procédé est appliqué à un premier appareil et le procédé comprend :
la réception (401) d'un premier message à partir d'un second appareil, dans lequel le premier message est utilisé pour demander ou configurer au moins une information de détection,
et l'au moins une information de détection comprend des informations d'attitude et des informations d'emplacement de mouvement du premier appareil ; dans lequel les informations d'attitude représentent un emplacement tridimensionnel du premier appareil et déterminent une structure de réseau et un angle d'orientation d'un réseau d'antennes lors d'un balayage ;
dans lequel les informations d'emplacement de mouvement du premier appareil comportent des informations de paramètres de mouvement du premier appareil et/ou des informations d'emplacement spatial du premier appareil ; et
la transmission (402) d'un premier signal à une région de détection cible sur la base de l'au moins une information de détection.

2. Procédé selon la revendication 1, comprenant en outre :
l'envoi de l'au moins une information de détection au second appareil.

3. Procédé selon la revendication 2, dans lequel le premier message est en outre utilisé pour demander des informations d'exigence de précision, et les informations d'exigence de précision indiquent une exigence de précision pour les informations d'attitude ; et
les informations d'attitude qui sont envoyées par le premier appareil au second appareil satisfont à l'exigence de précision.

4. Procédé selon la revendication 2 ou 3, dans lequel le premier message est utilisé pour demander l'au moins une information de détection, et le procédé comprend en outre :
le fait de déterminer s'il convient d'envoyer l'au moins une information de détection ; et
si le premier appareil détermine d'envoyer l'au moins une information de détection, la réalisation d'une action d'envoi de l'au moins une information de détection au second appareil.

5. Procédé selon l'une quelconque des revendications 1 à 4, comprenant en outre :
la réception d'un deuxième message envoyé par le second appareil, dans lequel
le deuxième message indique au premier appareil de passer d'un premier mode à un second mode, un signal dans le premier mode est un signal de communication, et un signal dans le second mode est un signal de détection ou un signal de détection et de communication intégré ; et
la transmission d'un premier signal à une région de détection cible sur la base de l'au moins une information de détection comprend :
la transmission du premier signal à la région de détection cible dans le second mode sur la base de l'au moins une information de détection.

6. Procédé selon l'une quelconque des revendications 1 à 5, dans lequel le premier message est en outre utilisé pour configurer une périodicité de transmission du premier signal par le premier appareil ; et
la transmission d'un premier signal à une région de détection cible sur la base de l'au moins une information de détection comprend :
la transmission du premier signal à la région de détection cible sur la base de l'au moins une information de détection à l'aide de la périodicité.

7. Procédé selon l'une quelconque des revendications 1 à 6, dans lequel le procédé comprend en outre :
la réception d'un troisième message à partir du second appareil, dans lequel le troisième message indique au premier appareil de transmettre le premier signal à la région de détection cible à l'aide d'une première bande de fréquences ; et
la transmission d'un premier signal à une région de détection cible sur la base de l'au moins une information de détection comprend :
la transmission du premier signal à la région de détection cible sur la base de l'au moins une information de détection à l'aide de la première bande de fréquences.

8. Procédé selon l'une quelconque des revendications 1 à 6, dans lequel le procédé comprend en outre :
la réception d'un cinquième message à partir du second appareil, dans lequel le cinquième message indique au premier appareil de transmettre le premier signal à la région de détection cible dans une première direction de polarisation ; et
la transmission d'un premier signal à une région de détection cible sur la base de l'au moins une information de détection comprend :
la transmission du premier signal à la région de détection cible sur la base de l'au moins une information de détection et de la première direction de polarisation.

9. Procédé selon l'une quelconque des revendications 1 à 8, dans lequel le premier appareil transmet le premier signal à la région de détection cible à une pluralité de reprises pendant le mouvement, pour former un premier réseau de transmission virtuel.

10. Procédé de communication, dans lequel le procédé est applicable à un second appareil et le procédé comprend :
l'envoi (401) d'un premier message à un premier appareil, dans lequel le premier message est utilisé pour demander ou configurer au moins une information parmi les informations de détection suivantes, et l'au moins une information de détection comprend des informations d'attitude et des informations d'emplacement de mouvement du premier appareil ; dans lequel les informations d'attitude représentent un emplacement tridimensionnel du premier appareil et déterminent une structure de réseau et un angle d'orientation d'un réseau d'antennes lors d'un balayage ; dans lequel les informations d'emplacement de mouvement du premier appareil comportent des informations de paramètres de mouvement du premier appareil et/ou des informations d'emplacement spatial du premier appareil ;
la réception d'un premier signal d'écho à partir d'une région de détection cible, dans lequel le premier signal d'écho est obtenu par réflexion, par la région de détection cible, d'un premier signal transmis par le premier appareil à la région de détection cible sur la base de l'au moins une information de détection ; et
la détection de la région de détection cible sur la base de l'au moins une information de détection et du premier signal d'écho.

11. Appareil, comprenant une interface d'entrée/sortie, et l'interface d'entrée/sortie est configurée pour réaliser des opérations d'envoi et de réception dans le procédé selon l'une quelconque des revendications 1 à 10.

12. Appareil selon la revendication 11, dans lequel l'appareil comprend en outre un circuit logique, et le circuit logique est configuré pour réaliser une opération de traitement dans le procédé selon l'une quelconque des revendications 1 à 10.

13. Support de stockage lisible par ordinateur, comprenant des instructions informatiques, dans lequel lorsque les instructions informatiques sont exécutées sur un ordinateur, l'ordinateur est activé pour réaliser le procédé selon l'une quelconque des revendications 1 à 10.

14. Produit de programme informatique, comprenant des instructions exécutables par ordinateur, dans lequel lorsque les instructions exécutables par ordinateur sont exécutées sur un ordinateur, l'ordinateur est activé pour réaliser le procédé selon l'une quelconque des revendications 1 à 10.
